(19) **Europäisches Patentamt / European Patent Office / Office européen des brevets**

(11) **EP 4 307 191 A1**

(12) # EUROPEAN PATENT APPLICATION

(43) Date of publication:
**17.01.2024   Bulletin 2024/03**

(21) Application number: **23184603.1**

(22) Date of filing: **11.07.2023**

(51) International Patent Classification (IPC):
**G06Q 10/0631** *(2023.01)*   **G06Q 10/0633** *(2023.01)*
**G06Q 10/0637** *(2023.01)*   **G06Q 10/0639** *(2023.01)*
**G06Q 10/067** *(2023.01)*

(52) Cooperative Patent Classification (CPC):
**G06Q 10/0633; G06Q 10/063116; G06Q 10/06313;
G06Q 10/06315; G06Q 10/0637; G06Q 10/06393;
G06Q 10/067**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **12.07.2022   DE 102022117388**

(71) Applicant: **Einhell Germany AG
94405 Landau / Isar (DE)**

(72) Inventor: **THANNHUBER, Markus
94405 Landau an der Isar (DE)**

(74) Representative: **Wittmann, Ernst-Ulrich
Withers & Rogers LLP
Kaulbachstrasse 114
80802 München (DE)**

(54) **A COMPUTER-IMPLEMENTED METHOD FOR OPTIMIZING PROCESS ASSEMBLY**

(57)    A computer-implemented method for optimizing process assembly by handling process building blocks is provided, the method comprising modelling work package elements into process building blocks, arranging process building blocks in data models, enacting and assembling the process building blocks and updating the data models. A non-transitory computer-readable medium comprising instructions which when executed by one or more processors cause the one or more processors to perform the steps of the method and a process building block handling system for implementing the method are further provided, wherein the system comprises the non-transitory computer-readable medium, a process building blocks library, an enactment engine and a content engine.

Figure 1

Processed by Luminess, 75001 PARIS (FR)

**Description**

The present invention refers to the field of building blocks management and organization, in particular to the assembly of process building blocks for processes leading to the delivery of products.

The issuing of a product in an industry environment may entail a complex sequence of steps to be carried out by competent individuals or resources under the supervision of other competent individuals or resources.

The steps to be carried out by individuals or resources in such industry environment may be arranged into projects. A project may be seen as a collection or plurality of processes, resulting in the delivery of a product, wherein the processes may be somehow related to each other, in particular within the context of the delivery of a specific product, within a specific project directed at the delivery of said specific product.

Each process may be seen as a collection or plurality of actions, better described in process building blocks (also referred to as PBBs in the present document), wherein such process building blocks may possess attributes, properties and descriptions by which they can be grouped, sequenced or linked to one another in order to build one or more processes and conduce to their execution.

In order to manage pluralities of projects, pluralities of processes forming a project and conducing to its deliverables, and pluralities of process building blocks, a suitable digital infrastructure (declarative process tool) for digitization and digital management (coordination and enactment) of highly dynamic processes needs to be developed.

Such a digital infrastructure may reveal very beneficial for the implementation of product development projects, which are customary in industry. The digital infrastructure should make it possible to replace the organizational form of project organization that is usual in the product development context with a much more efficient form of process organization and generate the associated added value in a project factory.

So far in the prior art, industrial projects, dealing with topics such as product development, organizational development, or plant development, have been largely viewed and managed as solitary entities. They take place in large numbers in industrial companies and require large supporting management structures in any department involved in multiple and/or cross-related projects.

Moreover, different subsidiaries of an industrial company may be accessing and managing similar processes at different times, without a timely shared and content-accurate knowledge of those similar processes running at their counterparts, leading to delays in efficient distribution of knowledge across the company.

A redesigning of how to make both the collection of processes and their execution much more efficient may be relevant to the industry and improve the designing, development and distribution, within the company and across subsidiaries, of completed and ongoing projects.

Together with a good methodological basis, the options for processing that are not available today in the field of process management and all related technological fields of handling complex processes and data, may be easily implemented at a later stage.

The method and system described in the present document aim to, at least partially, overcome the challenges of the prior art. The scope of the invention is determined by the appended claims.

In particular, a computer-implemented method for optimizing process assembly is described in the following paragraphs, the method comprising the steps of populating, at a storage location, a system database with a plurality of work package elements, wherein the plurality of work package elements comprises work steps and work resources; modelling, at a processing unit, one or more work package elements of the plurality of work package elements into a plurality of process building blocks, wherein the process building blocks are stored into libraries; assembling, and preferably dynamically assembling, at least a subset of the plurality of process building blocks into a process, wherein dynamically assembling is based on at least one of a user selection and an automated linking to be carried out in a dynamic manner; enacting, at an enactment engine, one or more of the plurality of process building blocks, wherein enacting comprises tasking one or more work resources of the plurality of work resources with carrying out at least a subset of the plurality of process building blocks, based on the modelling of the one or more work package elements of the plurality of work package elements into process building blocks, wherein modelling comprises assigning information, and wherein a data representation of the process building blocks resulting from any of the method steps is stored at the storage location or at a further storage location and structured into data models, and wherein the step of assembling is based on model information from the data models.

In the meaning of the present document, a storage location, a further storage location, or any suitable storage location, can be a physical or virtual location, local, remote or distributed or of any other type, suitable to allocate a given amount of data, including metadata and other information. Any further location also considered in the meaning of the present invention can be any storage location as described. The data populates a database. As databases herein many types may be used such as for example, relational, non-relational, structured, table- or graph-structured or any other database type. Databases are intended as large collection of data, more or less organized according to the data handling procedure followed in implementing the method herein described.

A work package element, as intended in the present document, may be represented by a large variety of items, and is herein typically referred to any of a work resource or a work step to be used in a process, and/or to be used in the issuing of a product. Examples might include a skilled work resource with or fulfilling a specific capability, such as for example a production worker, a product manager, or a purchasing agent, as well as a work step to be performed such as, for example, the connecting of a screw, or cable, the mounting of a gear piece, or the purchase of an engine part, etc... A work package may ideally include any combination of resources and tasks to be performed by those resources in order to complete the "work" associated with the work package.

A work package represents how the computer implemented environment, where the method is carried out, connects to and acts on the real world, by causing a succession of actions, and ultimately leading to a physical change, by managing the tasks of real people and managing the assembly of these tasks and their execution by said people, and wherein said people are comprised in said work resources and possess or fulfil specific capabilities, as specified in the capabilities information associated with the work resources. Work packages may not have a set hierarchy, while work package elements may include information deriving from description, attributes and properties that might enable the system to model them into process building blocks, with defined relationships, planned timing, hierarchy of execution, dependences, etc...

Capabilities or information about capabilities or capabilities information might not be used in case of dealing with automated tasks such as, for example, the shipment of nails, screws, washers, compressor or dangerous goods. Capabilities may also be utilized for selection of suitable work resources, if the task is therefore so clearly defined that.

Together with capabilities, of for the purpose of fulfilling capabilities associated to one or more work resource, qualifications are the relevant abilities to perform specific tasks possessed by work resources, at different levels, rank, or experience. Capabilities and qualifications are herein regarded as having meanings differentiating the ones from the others. Capabilities may be herein intended and understood as requirements that belong to a process building block in that a process building block requires work resources for its fulfillment that have a certain set of capabilities and/or knowledge. In order to make sure that the enactment and/or fulfillment of the PBB in a process is happening at the right quality. Qualifications are intended as belonging to the work resources. Qualifications are earned by trainings and are held by resources/employees.

In the method of the present invention, a capability associated with a work resource or with a PBB, is regarded as fulfilled if a certain set of qualifications is available in association with a resource. If this is the case the resource can be selected to fulfill and/or enact the PBB in a project/process.

Therefore, according to the present invention each work step is provided with at least one of descriptions, attributes, and properties, and each work resource is provided with at least one of capabilities and qualification information.

A further operation to be executed within the method of the present invention may be configured as a step of monitoring and reporting any of the previous steps and the plurality of process building blocks, wherein monitoring comprises ensuring that previous, simultaneous, or future steps are carried out according to a planned timing, schedule, or order.

Once process building blocks have been enacted, this may cause the work package elements that have been modelled into said process building blocks to fall into a structured, organized or hierarchically arranged sequence, wherein each of the tasks have been arranged to be executed according to a planned timing, schedule or order. The step of monitoring may help ensure that said sequencing is carried out correctly, may help identify and correct errors or accidents on time, to enable smoother operation.

Monitoring is herein defined as observing the process execution and ensuring the smooth running of operations; this is is mainly concerned with the process execution and operation of the method and method steps as described herein. Interesting information that might be useful comprises information about which processes are active, which PBBs are currently active, which PBBs are currently waiting, which PBBs/milestones are overdue, which users need a training on PBBs, which PBBs don't have a user, among other types of information. This information may be presented to the user as dashboards with respect to their roles in the organization and within the assigned tasks or to-do-lists.

In relation to monitoring, it might be useful that users be able to decide whether they want to get actively informed for example via e-mail if certain conditions apply like, such as if any new task was assigned, if a PBB is overdue, intending wherein a task represented by the PBB has not been executed or not on time, etc.

A supervisor for the step, the task or the monitoring or the notification or the process, could be able to set conditions concerning his employees or work resources. The system might provide the ability to configure whether the notification is sent at once, daily, weekly or with any other frequency, according to the type of task and the capabilities required.

A Notification System based on the concept herein expressed, could be closely linked to a system's event management. Reporting, as herein intended, is concerned about organizational reporting functionality. Interesting information that might be useful comprises information about bottleneck analysis, process times analysis (standard deviations), multiple correlation analysis (also named phase X of a project), matrix-views (see Open Points), rate of projects on-time, rate of projects in-cost, among other types of information.

According to the present invention, it may be useful that the method herein disclosed provided interfaces for data exports so that third party analysis tools may work on the data and additional reporting can be externally arranged.

Moreover, each work step may be provided with at least one of descriptions, attributes, and properties, and each work resource may be provided with at least one of capabilities and qualification information.

Using descriptions, attributes, and properties, for example provided as text information of however else codified and rendered accessible to the system's users, work steps of a plurality of work package elements may be accurately examined and their function, usefulness and suitability to a process appropriately assessed.

According to the present invention, each work package element may comprise at least a work step and is prepared for a work resource assignment to a work resource.

In the meaning of the present invention, a work step is a step of a certain work, eventually belonging to a process, that might be tasked to a work resource, that might be assigned to a work resource according to definitions and or attributes of the work step, and/or to capabilities information of the work resource. This assignment as herein intended may be not fixed, so that it can be decided based on the specific requirements of a process or may be fixed and predetermined in particular for certain given processes, within projects, such as for example repeated processes, for example common to several projects. In the meaning of the present invention, all information or documentation may be wished to be continually saved and stored. The process documentation may comprise files and texts / posts by users, etc. The files and posts by users for example could be organized in a tree structure (as discussed in other parts of the present document) - like a file system structure - with folders. In the meaning of the present invention, granting or restricting the access to certain folders to users of the process may be made possible. The process documentation may be itself organized in a document database that allows tagging, data retrieval, indexing, searching, reporting etc. This organization system may allow documents to be retrieved along a given structure or a structure that could be used as a model for future processing. Such a database could also handle user posts and project community communication / meeting notes, etc. Creating templates for the folder structure (for a file system) or database structures (for a document database) may be enabled to apply them automatically at the start of a new process.

Process building blocks are herein considered as the modelled work package elements, therefore provided with all the information for their execution, and a data representation of them is arranged into data models. Process building blocks as described herein may have an internal structure, carry about the information from the work packages in a codified way, so that each process building block may be enacted, searched for, recalled, discarded and/or executed, using the information therein contained, by accessing features of the data models wherein the process building blocks are organized. To define process building blocks, some more concepts and conceptual features will have to be introduced in the description in an organic way. Some of these concepts will be explained more in detail later on, but their introduction at this stage is intended to help with the understanding of where, in the architecture of this process assembling tool, they play a useful role with respect with the building blocks of said architecture, namely the process building blocks.

According to the present invention, the method further comprises updating the data models, based on any of the method steps, wherein updating the data models comprises updating model information.

Updating data models has the advantage of contributing to the building of knowledge (about products and processes within the organization wherein the method is applied) based on assigned, collected and updated information which may lead to a reduced burden for future issuance of products or processes; in particular, the burden for further information to be assigned, collected and eventually updated, and the times and costs of any of these procedures, may be reduced.

Moreover, in further embodiments of the present invention, the method further comprises storing, at any suitable storage location, data representation information and data model information.

The idea behind saving and storage of data representation and model information is connected with the general concept of building a knowledge database, a dynamic and/or distributed data repository or any given sort of dynamically accessible resources, comprising physical storage, that can be accessed at any given point in time and space, and even synchronized across different locations, by using means purposely designed to this end. The advantage of a dynamically accessible storage of data and information on such data obtainment, arrangement, structure among other features, is, among others, to provide means for expediting products designing and issuing, reducing costs and time. The knowledge associated with single PBBs, their assigned and associated information, information on their data structure and further features as listed across the document, enables the use of such blocks across a variety of products and processes, and carries the intrinsic ability to produce valuable statistical assessments and analysis to expedite delivery times and reducing costs by storing past and present activities and enable learning and predicting of future ones.

A Process Building Block (or PBB) as herein intended, may represent for example a specific capability typically associated with a work resource or a specific work step in a process, and wherein a work resource can be, for example, a user having said specific capability, and which may also be coded into or as a PBB. PBBs according to the present document are not intended to be nested into each other, so that no macro-micro-level breach may occur: this means that a PBB itself contains all the information necessary for completing a work step as a work package element from which the PBB has been modelled. PBBs may be chained and/or linked with each other, however, during the execution of a process, a PBB has typically only one direct predecessor. A PBB itself may be versioned. A version of a PBB, as herein intended, describes its static state at a certain point in time, therefore a new version may be created every time the PBB undergoes any changes. This can help with the correct linking execution of a process at execution time. However, not all changes of any given PBB are required to result in a new version, e.g., an update of a label because of a typo, does not have to necessarily result in a new version of a PBB. In any event, any version can be saved if the person responsible for the PBB decides so, even discarded versions, for example in order to build knowledge on a possible path conducive to an invalid or to-be-discarded PBB. The versioning mechanism envisioned in the present description can support roll-out of changes either for only new or running projects, where possible, appropriate, or reasonable to do so.

The advantage of such a versioned system storing PBBs versions is to provide, store and update knowledge regarding the PBBs, and have said knowledge accessible by the system.

Every PBB may have a primary and a secondary owner. Those owners are professionally responsible for the PBB and define how the PBB works from a professional point of view. The owners of a PBB can create and/or modify it or delegate the work to a dedicated set of PBB maintainers.

The meaning of the owners being professionally responsible for the PBBs in this context shall be understood as the functional and professional responsibility of the purpose, intention, and execution of the work package element modelled into a PBB. This may include responsibility and the definition of standard operating procedures (SOPs), verdict criteria for the evaluation of the quality of an executed work step as well as the relationship and interaction with relating work steps in an operational process.)

According to embodiments of the present invention, each process building block comprises one or more of a macro level, a micro level, content panes, an inbound condition, gates and a status model..A PBB may have the following structure, which may comprise the following elements: a macro level, a micro level, content panes, inbound conditions, gates, and a PBB status model.

In particular, meta-information, such as information that is derived and edited during the design of the PBB, may be stored on the macro level. The macro level comprises structural information, which is not intended to be modified during the execution of the process. This information may include: the name of the PBB, a description of the PBB (rich text), primary owner and secondary owner [-- Explanation roles, groups... maintainability!], planned timeframes for any activity for which the PBB may be deemed suitable, search identifiers such as for example tags, keys, organizations, domain identifiers, capabilities (see section "Capabilities" for a more detailed description of the capabilities). By organization throughout the current document, it is typically intended an organized group of people, or work resources in some cases, having a purpose to conduct activities, for example leading to the issuing of one or more products, said products comprising physical products or services.

The term "wrapping information" may be used to refer to this list of information. The items from this list may be obtained and implemented in a first step when a new PBB is created, and for example when a work package element is modelled into a PBB. Later on in the PBBs handling, these items may be edited in a managed way by an editing environment that allows macro-level meta information to be systematically altered, edited and further developed throughout the evolution of processes and process building blocks. This might include, e.g., updating of names or descriptions, reassignment of owners, editing of search identifiers, etc.

According to an embodiment of the present invention,the process building blocks form an ontology, wherein process building blocks are at least grouped in different domains, assigned tags and identifiers, being searchable and having assignments within the ontology, thereby forming a functional library.

In the meaning of the present invention, all PBBs might be placed within an ontology to increase benefits of the organizational system and method. The ontology may serve for grouping PBBs by business domain contexts. One PBB can have several assignments in the ontology. The ontology itself can be used to search for specific PBBs (search identifiers) when creating new PBBs or to get an overview which PBBs are assigned to different domains.

In particular for tagging purposes, the PBBs handling system may provide possibilities to maintain a tagging ontology to ensure consistency in naming (naming conventions, taxonomy, etc.), such as, for example: rename, add, merge, split, delete, perform changes in hierarchy.

The name of a PBB may be used as a first human-readable identification, together with a primary key that may identify a PBB in the system databases. The description just textually describes the PBB. Moreover, the primary and secondary owner can also be stored on the macro level. For maintainability reasons, owners shall be considered in the system's roles and group models so that a change or a human work resource can be easily handled and does not require owner tags to be mass-edited.

Planned timing specifications for each PBB may be stored. In particular, planned timing specifications include work resources and process time. Work resources time is the time that the processing unit modelling the PBB actively requires for processing at the micro level. The process time is the time between the start and the finished time marked using the enactment step. The method and its implementation system may adequately support a user by its time-keeping activities with proper functionalities to manually as well as (semi-) automatically track and record times.

It may be possible to store planned cost specifications for each PBB. It is intended that external or internal costs not directly related to the involvement of resource times can be directly considered and maintained here. Resource related costs may be calculated by resource times and hour rates for the intended resources.

During enactment for a specific project where the PBB is invoked it is possible to document actual work resources and process times. It is also possible to obtain work resource costs computed by provided costs-per-minute for the work resources that have been engaged to execute the work package assigned with the PBB. During enactment time, it also needs to be possible to record actual non-resource related costs. Key Performance Indicators, such as efficiency, utilization and performance could be made available at a PBB level, at a project level or in a resource or organization chart unit basis as suitable for the key performance indicator (KPI).

In order to be able to find generated PBBs, such as PBBs as arranged into data models, each PBB might comprise search identifiers, intended to act like tags. Search identifiers are primarily used to link the PBB in a given project context to process execution. Under linking scenarios such as "selection by user" and "automated linking", search identifiers can be used by logical search phrases or queries to create proposal lists, shorten proposal lists, sort proposal lists, etc.

Search identifiers might include tags describing operational targets of a PBB, the organizational domain for which the PBB is intended, process types for which the PBB is intended, information or content to be derived during PBB execution for the project's content environments.

The PBB's macro level, from a conceptual point of view, describes how the process building block and with it its signed work package element integrate in the organization's macroscopic domain. The organizations macroscopic domain reflects all those elements of the organizational world that define and describe how processes are assembled and operated, how work package elements are sequenced or processed in parallel, or in more general terms how the course of cause and effect propagates in order to assemble organizational processes. The macro level, also called macroscopic domain herein, is mostly concerned with the process control layer and the mechanisms by which process building blocks are assembled into processes. The macroscopic domain is mostly not concerned with work execution or how a certain work package element has to be fulfilled by a work resource being tasked to work on it.

On the micro level it is defined what the processor of the PBB may be requested to do (work package element information definition). This depends on the current context of the process execution.

Next to the actual definition of the work, it is possible to define separately what may be useful to do once the PBB is terminated or cancelled and the PBB was already processed. In case of such a clean-up scenario, following error-handling strategies may be considered: the default action of doing nothing; a compensation action (additional work information definition in the micro level); delegate to other PBBs.

To define the work information, the following structural elements might be included: Text information (SOP (Standard Operational Procedure) / Work instruction); attachments in the form of, for example, documents and/or images; configurable content panes consisting of labels and Content Bricks (Content Bricks represent the objects that are built up in an ontology/taxonomy, used by an organization to collect, store and present information content that is gathered, derived and used in given projects and their related processes /PBBs (see data models); configurable checklists based on static labels or Content Bricks (supporting work packages best guided by a checklist approach) - to complete the work package every element in the checklist is to be provided / ticked off; interactive forms (forms provided by IT Department); micro-workflows ideally integrated as a plug-in solution, building on existing, simple to use work-flow systems; as, within a PBB, it could be useful to properly scope work package elements, reference is herein made to micro workflows (One-Person workflow) in a first instance, making a light weighted and simple solution workable. If a plug-in solution is not doable, workflows could be pre-programmed single solutions for specific PBBs to be provided by IT-programmers (possibly a first step); interactions with external systems; plugins for macro recorders / Office Robotic Systems. These elements can reoccur several times within one corresponding micro level. For each property value of a Content-Brick the source of the data might be defined. The following sources may be then considered: user generated, such as entered by a user, selectable for predefined (object) list, selectable with defined external source; predefined values; domain content data models; process content data models; external source.

Interactive forms, micro-workflows (as long as not realized as a plug-in-solution with a third party's product) and interactions with external systems can be pre-defined and programmed functionalities, which can be developed separately.

The micro level of a PBB conceptually relates it to the microscopic domain of the organization, as herein intended. The microscopic domain conceptually speaking presents those parts of the organizational world that are related to actual work execution by the resources of an organization. The microscopic domain describes, guides and supports employees, or work resources, when carrying out their work to fulfil a work package element in its related PBB. In the microlevel of a PBB the interaction of work package elements or how they are sequenced is not necessarily described, with the exception that data and information (project content) may be properly presented for work execution and may have to be properly acquired and documented during work execution. This data and information thus typically is related to preceding PBBs and/or to PBBs that still follow.

The inner part of a PBB to this point is related to a different domain. Nesting PBB's thus would break domain levels, which may represent a further evolution of the system herein presented, and it is therefore optionally included as open-ended development.

Inbound conditions represent the input conditions, which are typically met before the PBB can be started. The conditions check the data in the process data model or domain data models and may or may not be prepared for a given PBB. Inbound conditions may correspond to the use of search identifiers in that they are used to realize a linking of PBBs.

In any cases where a PBB has been found by a search or is part of a list of options, the PBBs inbound conditions may be evaluated before said PBB is proposed for being included in a given enactment process.

The inbound conditions represent herein logical clauses that evaluate the project context, based on the values that have already been acquired in the project's content models (domain data models and process data model; see data models). To this point, no matter whether a preceding PBB has been searching or seeing a PBB as a potential successor, the PBB has a chance to independently evaluate the situation, working through logical checks or computing an applicability value. Both can be used to include or exclude a PBB in a list of selectable PBBs or to compute a ranking of selectable PBBs.

Gates represent exits (linking, connection points) of a PBB and help with the assessment of which PBBs may come into question next if needed. The number of gates may typically be fixed. Gates are used for the control flow of the PBBs (see Control flow).

Using the gate information, it is possible to assess which successor PBBs are available. Typically, and without prejudice on further developments, only one successor PBB may effectively be used per gate at execution time of a process. The following possibilities of how to select or identify a gate could be provided: direct linkage, such as conditional linking (multiple specific PBBs of which one is selected by evaluating conditions and logical clauses based on data in the content environment), and fixed linking (one specific PBB); selection by user in the following configurations: supported by a suggestion system (prepared search, AI, rating functions of PBBs, etc.), without support by explicit search for PBBs by the user or fixed selection of possible PBBs; or automated linking (PM-Tool itself determines next suitable PBB, search based and/or AI-based).

If a search result contains only one result entry, it would be helpful if this entry may be selected automatically. If there is no search result, a dedicated escalation step must take place. In such case, a new task for the processor of the current PBB has to be created or - alternatively - such situation needs to be handled by the event management system (escalation).

Another escalation scenario that may be addressed is that the user believes that a presented follow-up PBB is not suitable or a given gate should not be opened at all in a given situation. In this case, the user must be able to manually throw an event for the system's event management. For such implementations, it is helpful that the architecture of the search and selection functionality be modelled in a modular way in order to be ready for future enhancement. Further properties and examples of operations of the PBBs according to the present inventions, will be provided later in the present description.

According to embodiments of the present invention, the plurality of process building blocks comprises at least one of start, normal and milestone process building blocks.

In the meaning of the present invention, several types of PBBs may be identified. Besides the "normal" PBB which as herein mentioned is intended to represent a capability of a user of a specific work step in a process it might be beneficial to have additional PBB types which provide specialized functionalities. The basic types of PBBs are start PBB, normal PBB and milestone PBB.

In the meaning of the present invention, start PBBs of this type are designated to start a new process for a given project. Those PBBs may not require a complex Micro level but at least the mandatory Content Bricks defined for the start-nodes in process data model and assigned domain data models have to be acquired. Examples of such contents are customer, country, product group, among others.

Conceptually speaking, these contents may define core data to characterize the project, define crediting data to enable the user crediting function (useful for resource assignment), define a global project priority, etc. The priority might be displayed in the task list (Task list management) and considered e.g. for the ordering of tasks.

Regarding what is herein intended for normal PBB in the meaning of the present invention they might represent the bulk of all PBBs. They contain the complete structure of a PBB as described above.

Milestone PBBs in the meaning of the present invention may not require a micro level. Their main purpose may be intended as to get an overview of the process state in regard to monitoring and reporting functionalities. Milestone PBBs may also be used for crediting PBBs.

In the meaning of the present invention, it is envisioned that each user/resource of the method and system herein described may have their own task list showing the PBBs that they need to work on. The tasks of a user are created and assigned by the enactment engine.

Tasks may be typically closely related to a specific PBB. In the meaning of the present invention, tasks and PBBs from this perspective may or may not be separated entities. In the meaning of the present invention, however it may as well be considered that tasks may be at any time introduced as separate entities. This would decouple tasks and PBBs and would allow to spurn different types of tasks under different situations during the enactment of an PBB. This would also allow independent microstate models for tasks.

When working on a task, users may be able to get to the Micro level of the corresponding PBB, which this task represents. Additionally, they must be able to change the state of the PBB and put successor PBBs on hold (see examples below). When transitioning from one state to another the user may wish to be able to comment the state change as well as to log the required processing time and related costs. Time keeping functionality should help the users with (semi-)automated time keeping were possible.

In the micro-level of a PBB, which users may reach via a task, users may wish to be able to access the Domain content data models as well as the Process content data model to get an overview of the complete state of the process. Moreover, they need to have access to the different process execution contexts with the ability to copy data from failed PBBs. Additionally, users may be able to view similar processes and view the data (see the Cross projecting example below).

The tasks within a task or to-do lists in the meaning of the present invention, may be manageable by users in a way that they can prioritize their tasks. Resubmission should also be possible. Along with the question of a proper task list management and task sorting, comes the question of a project prioritization. When kicking off a project it should be assigned with a numeric priority identifier. The larger the identifier number the more important the project. Throughout the life of a project priorities could be adopted for strategic reasons. Tasks in the task list could than inherit project priorities and could be properly sorted top down. In later stages, priorities could be changed for different project phases only and related tasks could likewise be inheriting this prioritization from their project phases. This would allow work groups to alter priorities to better fit limitations in resources.

Due dates and open times are other parameters to be considered according to the present invention, that could be used for sorting functions. In view of further development, it will be possible to agree on a balanced score computed from several parameters to define an optimized ranking and thus sorting of tasks in a task list.

The Enactment-Engine uses the authorized users of the Domain content data model of the process as starting point and checks for users with appropriate capabilities - also currently unavailable users must be considered. For each remaining User crediting function has to be applied and the user with the highest score will be assigned for the task.

According to the present invention, the computer implemented method herein disclosed further comprises executing the process, wherein executing the process comprises executing the work steps from the work package elements modelled into process building blocks and tasked to one or more of the plurality of work resources.

Executing the process may be required to deliver a particular result, such as, eventually, a product, or in the short term the specific result expected from the given process. Each work package element is susceptible of being executed or carried out, according to the present invention.

PBBs linked to a process of a given project share a common data space in which they store all their data for the corresponding project (the process data model). Every PBB involved within the process creates a separate execution space, which serves as a separate scope for the stored process data (see data models). If a PBB is aborted or terminated (see PBB status model) and afterwards executed again, it may create another separate scope and it might be handled in such a way that it is possible to view and/or copy the data from the parallel scope.

If a successor PBB fails A Process Building Block (or PBB) as herein intended, may represent for example a specific capability typically associated with a work resource or a specific work step in a process, wherein a work resource can be, for example, a user having a specific capability.

In the meaning of the present invention, each gate may have a sequence number, which defines the sequence of the PBBs which come next after the current one. The sequence starts at gate 1 and the PBB behind gate 2 can only be started as soon as the PBB in gate 1 has been processed. Gates with the same sequence numbers are executed in parallel.

It is worth noting that caution might have to be taken at system implementation that in cases where gates are later removed during a PBB refinement process execution is not halted by missing gates and their sequence level - this especially applies to the gates with sequence number 1 or however a first gate is indexed in any given implementation of the method.

According to a further embodiment of the method herein discussed, the step of modelling is selected from a group of methodologies comprising local modelling and global modelling, and wherein during execution of the process each process building block has only one direct predecessor process building block.

In the meaning of the present invention, modelling may be explained as the act of systematically describing the work package elements, the procedures to be enacted to fulfil the work package, the preconditions that need to be met, the targets to be achieved, the methodology that may be followed, the SOP (standard operating procedure), etc. Systematic describing includes herein a both formal and machine-readable explication. Moreover, modelling may comprise at least one of chaining, linking, sequencing and timing individual work package elements of the subset of the plurality of work package elements with one another, based on the at least one of descriptions, attributes, properties, and on the at least one of capabilities and qualification information.

Local modelling comprises the understanding that each process building block is a self-contained agglomerate of information that may include all about how said block was generated, how it developed, the steps it underwent, where in the data model it has been used, arranged, to which other blocks it is linked, in which project it appears, etc... Moreover, to the end of completing a given project, and beforehand for a defined process execution, each process building block may conveniently have only one direct predecessor process building block, directly linking to it in a defined chain of process building blocks. Other modelling methodologies may be used to carry out the method herein described and may be employed in the overall computer system where the method is implemented.

According to an embodiment of the computer-implemented method in the meaning of the present invention, assembling the plurality of process building blocks into a process is provided, comprising static and dynamic assembling, and wherein static assembling mechanisms comprise direct linkage, wherein direct linkage further comprises conditional linking and fixed linking.

In the meaning of the present invention, it might be useful to establish some conditional or fixed linking between elements in the system, or modelled elements such as process building blocks, in order to prohibit or render not accessible other forms of assembly between objects. This may help in cases where part of the system has a very well-established configuration and already a known wanted output.

From a user perspective, the aspects of static (direct linkage) and dynamic processing (selection by user or automated linking) approaches may depend on the functional domain for which business processes are to be implemented. For quality assurance reason on one hand and flexibility reasons on the other hand, the right balance between a static processing approach (where exits of one PBB are statically linked to a second PBB) and the dynamic processing approach (where the selection of follow-up PBBs behind a potentially dynamically opened exit is dynamically searched, identified and selected) is very delicate. In most scenarios, the number of static links will greatly outnumber dynamic links. In particular, every project will have a rigid frame structure, depicting rigidly linked project phases that do span up the general framework for a project. Again in the next lower levels most milestone PBBs and procedural PBBs will be integrated by the use of fixed links.

Dynamic links come into play further down the road. Where it comes to detailed enactment scenarios, PBBs more and more have to be selected situationally. Even they are small in numbers and are deeper down to the leaves of the process trees, they make a big difference in results.

A well thought rigid frame structure of the processes that may be enacted for industrial projects, may provide the basis for two useful functionalities that could make process management successful:

a) Simulation views and graphical representations of rigidly linked PBBs: Pulling on an entrance node (start PBB) to a project template may be expected to review the full structure of all rigidly connected PBBs to this entrance node. These may represent the rigid skeletons in a dynamic processing world. When thinking of a new business process, the process designer in a first stage drafts a skeleton. He then implements the skeleton by implementing the PBBs and their rigid links. The method of the present invention may be well implemented when having a possibility to preview or graphically represent rigidly linked PBBs as this is the easiest way for the process designer to see that the way he modelled PBBs and linked them up, represents his initial idea of the business process. Wherever dynamic links would dock in dynamically selected PBBs they cannot be displayed in the process skeleton, however should the onset points of dynamic links be clearly marked in graphical representations of the project skeleton.

b) Project scheduling: When a new project is triggered, its skeleton can immediately be built-up and prepared in the process data model. All milestones that are part of the skeleton thereafter can be used to calculate the project schedule based on the process time foreseen/stored in the PBBs expected processing time property. In the industry it is typically enough to limit scheduling to the skeleton level. In the foreseen process times the variability due to dynamically added PBBs is just empirically considered. Based on this, the method of the present invention may enable implementation of at least two simple scheduling methodologies. Forward Scheduling (which schedules the skeleton nodes according to their sequential or parallel operational sequence, from a start date to a finish date) and Backward Scheduling (where the skeleton nodes are scheduled under consideration of their operational sequencing from a target finish date back to all the required start dates). Load considerations on different teams in the organization in a first step do not need to be considered. In a second step, load considerations might be considered just by expending or shortening the process times by considering expected resource loads in the different organizational units (organigram) and by considering the assigned priority of a project.

Dynamic links may provide a broad conceptual power to process designers. A difficulty for them, however, is the prediction of system behaviour at run time. It will be soon impossible to simulate all possible PBB selections opened and closed gates, etc. To support the process designer it should be possible to carry out local simulations by providing simulation data sets, for example copied from real life process and domain data models, which are then altered for the need of the simulation and by selecting a PBB from which on different scenarios would lead to different dynamic selections of PBBs. With these means the process designer would be supported in debugging configured dynamic links under different contextual scenarios, starting from a local PBB onwards to reduce dynamic complexity.

Regarding static links and skeleton, a running form of the method of the present invention as herein described may create a graphical tree representation of the skeleton. Here branches behind only conditionally open exits are still considered to be part of the skeleton. For the development of an improved version, a similar approach might be used, regarding statically linked PBBs behind a potentially conditional exit point to be part of the skeleton. In practical applications it may turn out that many of the conditions of conditional exit points may already be evaluated in very early stages of the project. Shortly after project instantiation thus, the skeleton can be refined to enhance scheduling calculation.

According to embodiments of the present invention, a plurality of processes form a project, and wherein at least a subset of the plurality of projects delivers one or more products.

By matter of conventions only, within the present document, a plurality of processes may be referred to as a project.

According to embodiments of the present invention, the one or more products are intended as taken from a list comprising further processes, services, angle grinders, impact drills, lawn mowers, rechargeable batteries, cars, planes.

In the meaning of the present invention, products deliverable with the method herein described may belong to a large number of categories, spanning from organizational deliverables such as more processes or services such as for example qualification, organization, software roll-outs among others, or physical products such as those mentioned above among other belonging to similar categories. An exhaustive list may not be formulated for the sake of conciseness; moreover it may depend on the products which are comprised within the scope of the organization implementing the method of the present invention. The method herein is therefore suitable for application in a broad range of both organizational and physical products, spanning over many different categories, as briefly listed above.

According to embodiments of the present invention, each project of the plurality of projects is associated with one or more data models.

Alongside processes, the acquisition of data and information may be comprised as a deliverable together with a related product or on its own and will be herein described according to the present invention. In most work packages as plurality of work package elements as defined above, given work resources providing specific capabilities, said work resources being for example, employees, might carry out value added work steps by working with existing, acquired, obtained, generated and stored information and by generating new information, or any of the previous acquiring, obtaining and storing. Even when measures are triggered, or non-information related work is carried out, for example based on each of the working steps of a plurality of work package elements, etc., it is worth noting down what has been done and when it has been done. The method herein described, which may be referred to as a process management tool in some embodiments, thus may be provided with its own infrastructure, structures to acquire and store data and information in own databases in the one or the other form. Such databases and data model may then be comprised in the architecture of such method. In the following, a description of the data models as they might be intended herein will be given, as such providing the basis for thorough architectural concepts to be developed and implemented. Moreover, a technical description might be provided of what might be implemented to realize such architecture. Functional requirements from the perspective of system users and organizational developers might be added to the conceptual structure, as described in some examples that will follow, to improve the outlined architecture.

According to embodiments of the present invention, the data models comprise at least one of a domain data model type and a process data model type, wherein all types of data models comprise structure data, content data and information data.

As herein described, according to the method of the present invention, several data models may be devised in which the PBBs may be arranged and may operate after the appropriate steps have been carried out, for example domain data models, in particular multiple domain data models, for example taken from the following group comprising generic product model, purchase bills of material definition, safety qualification schemes, function and handling qualification scheme; and process data models. The process data models as well as the domain data models as herein intended, will include data which will be further split up into structure data and content data.

The data for the data model may be either obtained within the method or system herein described or taken from external sources in form of for example third party applications, or input from within the organization as a starting point.

Third party applications may be connected with the system herein described, as deriving from the implementation of the method of the present invention, by a separate layer for reading and writing the data. This layer may be developed in any devised separate program and may not constitute integral part of a first implementation of the system as herein described. The data structures of the third-party applications may be added to the fundamental domain data structure model.

Possible data exchange definitions with third party applications may be defined ad hoc for the specific context. This is based on the fact that the time of synchronization might not be determined ex-ante. Additionally, the lifecycle of the other application must be integrated with the dynamic data structures of the PM-Tool.

Externalizing the data exchange in a separate layer (i.e. another dedicated application) ensures the most flexible way to synchronize the data with other applications.

The acquisition of data and information as well as the access to data and information may reveal beneficial for the execution of organizational processes. To support the dynamic processing, the system and method herein described may cater for adequate infrastructure to structure, to store and maintain as well as to retrieve and present data and information for the use in the microscopic work packages (presented to users during enactment) as well as for process control decisions. In addition data structures should be accessible for control purposes, for enactment purposes (for example the assignment of resources), for reporting purposes as well as for measuring organizational performance and suitable KPIs, balance score cards, etc. later on.

Collecting or presenting flat data in flat lists might serve less well the purpose intended here in the present document. Every bit of information, every data acquired or stored, needs to be properly contextualized in order for users / resources working on building blocks and their related work packages to properly understand and work on them. The data models or the content environment herein discussed, thus may provide modelling of both, structure (for example trees) and content (for example content bricks). Both together form suitable data models, of which we require not only one, but rather at least two or even multiple to be assigned to a single project.

A version of the system herein described might implement its own data and information holding structures, based on its own data base systems, suitable to realize required data models. These tools in particular may support the implementation of generic structures and generic content items that support the development of a suitable language space for organization employees in their professional working domain. In addition, a generic language space may be provided, related to the business processes or processing in general, depicting when and which process building blocks have been enacted and in which relationship they stood as well as which contents have been acquired in which work package.

Thus, the conceptual organizing of data on the roughest level when it comes to data structures in so called data models. Data models may define ways an organization structures and stores as well as retrieves and presents data. At least the two following data models will be discussed in the following, and namely process data model and multiple domain data models.

Each of the data models is having its structural set-up of nodes and edges (trees) its inner coherent structure along which data can be retrieved, queries can be executed, or data can be stored, preserved, and updated - everything in a fairly simple way, that allows configurators to be built to easily define a data retrieval, a query or the location into which acquired contents have to be persisted. As mentioned above, we believe that tree structures would be most suitable for process data models as well as domain data models. Most users implicitly understand tree-based data storage approaches as in use by file systems since decades. From this perspective, we should consider graph-based data base systems as a suitable choice. They offer a particular simple access for data extraction as well as data persistence in tree-structured models. However, it is important to well consider the existing deficiencies that graph data base systems still show in real life applications up until today.

The process data model is oriented in its basic structural principle at the evolvement of the business processes. Nodes and edges are generated alongside with the invocation of process building blocks (PBBs). Every PBB may represent a node in the data model. Every edge links gates (exits) of an invoking PBB to the invoked PBB. The generic structure of the process data model thus naturally develops alongside the enactment of a dynamic process. All contents derived in the work packages assigned to a PBB, are stored / persisted right with the PBB's representing node in the process data model.

The domain data model, assigned to a project, or the multiple domain data models assigned to a project may have a different structural orientation, and in particular their tree-structured hierarchy may be defined by the needs of the professional domain in which the project is executed. In projects for example, that are targeting the new development of a machine of a certain type, may for example follow the principles of a product data management structure depicting functions and physical implementations of a machine or its generic machine element structure or its BOM structure. Typically, for the professional domains it is known which domain models work best to store and retrieve data and information. Such data structures could for example be loaded as templates from template libraries to support the projects (for example structural PDMS (Product Data Management System) tree libraries, holding structural trees for angle grinders, impact drills, lawn mowers, etc.).

In many cases, however, these domain data models may be further developed or modified throughout the project by adding or deleting templated structure. In different professional domains, a number of different domain data models are required. These domain data models then have to support diverse content models, modelling different types of products, services, storyboards, or other content aggregations. Along process execution, again the nodes of the prepared or developed structures will be populated with content. Aside from pure structure, templates could already contain provisions for contents that are expected for a dedicated node. In addition, even actual content could be loaded along with the templates. Instead of loading a template, an existing domain data model from a previous project could be loaded together with all the contents, previously derived as versioned data. This would for example be the case for a product improvement project, triggered to improve an existing product that has been processed in the product development team in an earlier project. Throughout the improvement project, the existing data would be the basis for the improvement work, the domain focus would be to define the changes to the existing product and thus to the existing data structure and content to be acquired and persisted.

Where within the process data model, contents are generated and persisted that are developed alongside work steps of business processes, this is not the case for the domain data model. Data structures in the domain data models describe the relationship of data and information in relation to each other or in relation to a pre-defined professional domain model. In particular, for the content in a domain data model we have to expect that external data sources may play an important role. Contents could need to be acquired from external database systems or other data feeding applications. Just as after processing this data and information and deriving modified information, these modifications might need to be handed back to external database systems or data consuming applications for persistence. From a system theoretic perspective, thus we would like to draw the system border just alongside the database systems of the method and system herein disclosed and its interfaces, where required, to external data sources.

According to embodiments of the present invention content data comprises content data objects, wherein content data objects are content bricks.

In the meaning of the present invention, domain data structure models which are created by users (such as for example Semantic domain data structure model, Aggregate domain data structure model, Domain template data model) are required to have specific modelling functionalities which differentiate them from the Fundamental domain data structure model and might benefit from reusing the OOP Mixin concept. The term for this modelling concept is herein referred to as "Content-Brick".

Content-Bricks can be composed of other Content-Bricks from lower or equal domain data structure model tiers. The composition of the data structure is required to enhance reusability of domain data structure models.

While in the meaning of the present invention the structure has been presented wherein content may be stored in the data models, it may be beneficial to introduce storing of content to be presented for processing, to be persisted after processing or to be queried, to be modified, to be acquired, etc. Content, however, is herein to be intended as more than information and more than data in the context of this system. Content rather requires itself a possibility to provide a physical structure, presentational functionality, computational functionality, etc. Content is where data is conceptually stored, contained and to be retrieved from. But content is also what we want to present within the microlevel of a PBB! Content is not just numeric data sets, a string or an object reference but rather do we want to store information relating data or values to keys and physical units. Content should be something physical, an entity that we connect to for example for the microlevel of a PBB, for a control query in PBB exits or for reporting purposes etc.

For these reasons as intended in the present invention, it is possible to define within the framework herein described a dedicated object model for content, that provides all the classic methodologies known from object-oriented modelling, such as classes, instances and heritage. The aim of setting up such dedicated content object model may be understood as to span up a structured library of available content objects. With the object-oriented approach it should be possible to enrich the pure data by additional data structures and functions. Instead of single data items, the representation of simple or later even complex information may be enabled. Such as, in the simplest case, key value pairs, up to objects, that would hold multiple keys, multiple values or matured structures such as vectors, fields or other objects, units, requested values, actual values, tolerances, functional and logical evaluations, etc. Based on this approach, a number of items such as typing rules (weak or strong typed data concepts), data queries, logic functions to check consistency or validate data, persist data, etc., could be implemented. It is beneficial to provide here functions to convert physical units or present values converted correctly to user expected units under given local contexts.

The objects of the content models may be denominated as content bricks.

According to embodiments of the present invention, accessing data in data models is carried out by defining one or more configurable queries.

According to embodiments of the present invention, the step of enacting comprises executing the one or more queries.

According to embodiments of the present invention, executing a query comprises populating content panes in process building blocks with data from data models, and wherein one or more results of a query are stored based on one or more configurable persistence functions

Queries are used to extract information/data from data model; the persistence function is used to transfer the data back

An integral part of the content bricks object functionalities may be the possibility to access existing information in one of the data models by the definition of a simple query. During execution of a process building block, the execution of the defined query would populate the contents to be displayed during enactment. The queries have to be configuration items to be defined for example in configuration wizards when preparing a content brick for a PBB or when adding a content brick during process enactment to a PBB. The query definition (its configuration) has to address both, the source data model as well as the query pattern that reflects on keys, labels, IDs or contextual patterns, such as expected neighbouring nodes.

Throughout an evolving process execution, contents might be acquired and later on revised etc. The results of content brick queries might thus deliver multiple hits that need to be properly displayed in the user interface the content brick is implementing for its content. This could for example be done in a list sorted by youngest to oldest acquisition date.

Aside from the functionality to configure a query to populate the content brick, there needs to be a matching configurable persistence function. Content acquired during an actual enactment stage needs to be properly persisted into the data models so it can later be queried. Of course, only actual or changed data must be persisted and not all the result set that a query originally revealed.

A second functionality a content brick object may provide is the representation of data and information in a visual graphical user interface element. In the content pane of a process building block, contents from content bricks should be plug-in elements providing the right visualization for the type of content to be displayed. As within the content brick object the data typing is realized, units of measures are defined, a necessity or existence of tolerances or tolerance bands are addressed, requested, offered, agreed or actual values of properties are defined. For an object brick the form of data, be it a single value, a vector, a matrix, a list, a key-list etc. has to be designed. It is obvious that the way this data is presented is to be defined here. It would be impossible to define data representation from the perspective of a PBB or while a PBB is conceptually drafted. Data representation has to be linked to the data to be presented.

Owing to a potential complexity in data representation, the GUI may be expected to provide reasonable functionality to support convenience and usability for our agents working with the system. At first glance, the visualization may aim to summarize relevant information in a compact way. But the GUI may encompass functionalities to allow an inspection deep down into the full data structure of a content brick. It also needs to include feasible solutions to edit or enter content in adequate ways. Additional functionalities might include suitable views that might be displayed in detached window elements providing enough space for a proper data representation. The data representation in addition does need to display the result of functional checks or logical checks initiated after data input or data changes.

After a user has been working through a PBB (work package) in project enactment having analysed contents, changed contents or acquired new contents, the contents may be persisted, or stored with the possibility of being continuously updated and accessed at will. As described above, persisting, or storing and maintaining data and its accessibility may typically happen in a close analogy to querying data. The difference here is that the persistence might typically happen in the process data model in which all activities are persisted by default. Aside from the persistence in the process data model, contents might be persisted in domain data models as well. Whereas the persistence command for the process data model is to be implemented as a standard, the persistence commands for storing contents to the domain data models need to be configured. This configuration for one or several data models has to happen ideally wizard-based when a content brick is prepared for the use with a PBB or when a content brick is added during enactment time to a PBB.

The object model of the content bricks may require an own library. The library is the basis for a domain ontology, helps to maintain and administer the conceptual development of the ontology and with-it the proper use of content bricks in PBBs. It should support the users by identifying suitable content bricks for a given PBB (during PBB design phase), for domain data models (during their design/development) or to situationally add bricks during enactment.

Under most normal situations, PBBs are readily prepared with their content bricks. In order to do this there would be two possible approaches: approach a) would build on the object methodology to derive a sub-class of an existing library element or a dedicated object brick, which would be a new exclusive object for a given PBB. Approach b) would reuse the defined object in the library (dedicated content bricks) and just instantiate these objects for a given PBB during enactment with a defined object parametrization. The parameters to be loaded during instantiation, e.g. from a parameter DB, would specialize a content brick for its use in the given situation, at/with the given PBB. These parameters will need to include query phrases, persistence commands, sorting identifiers to identify plug in position in the PBB GUI etc.

Whereas approach (a) leads to the build-up of a larger number of computational classes that might need to be distributed during run time to client computers running the method and system herein disclosed, approach (b) requires a dedicated data structure for the context-based instantiation of content brick objects. Beside a pure library of object classes, thus an additional database to hold context relevant parameters would need to be part of the content brick library (Parameter DB).

One computational principle of the method and system herein described may be conceived as follows, in that PBBs are enacted at a given moment of time and are closed after the user has finished the enactment. At this point all persistence may happen and all instantiated objects are closed. If it later on turns out that a given work package did not deliver the intended result or failed and needs to be repeated, in the business process a new branch may be opened and the PBB may be instantiated a second time. With it all content bricks may be instantiated a second time. It may typically not be expected that objects "stay alive" a substantial time during process execution. This might suggest that a versioning concept might not be necessary; however, as data might be altered in a content brick during enactment of a PBB that requires longer times or multiple revisits / tasks, seems to suggest that instead a version concept might be beneficial.

The data persistence in the domain data models may requires a ridged versioning concept. As within the domain data models contents at a defined domain data node might change throughout the execution of an organizational process. For example, the power of an engine that has its representation in an PDMS domain data node might change throughout the execution of a development project from inquiry phase to design phase or qualification phase depending on the evolvement of the product development. In the domain data model thus multiple sets of data can be created and multiple versions of data sets to a content brick have to be safely persisted with a reference to time stamps, a link to the PBB and its position in the process data model within which the new data set has been created and the user who was working on the PBB at this point.

As described above it might be useful to equip the content bricks themselves with additional data structures. These data structures will also help to describe, define or tag content bricks, help with identifying family relations, etc. This metadata should be part of the library and should support the users properly utilizing the right content bricks at a given situation. Typically, decision on when and where to use a certain content brick can be taken in a conceptual stage. Mostly thus, this will happen under two situations:

A) when designing a new PBB or refining an existing PBB: a user with the ability to take care of PBB implementations (maintainer) will, together with an expert related to the organizational process (owner), define the content bricks that will be assigned to the PBB as well as define queries and persistence commands.

B) when building a domain data model, the nodes of the domain data model represent knowledge aggregation levels where typically a certain content is expected. For this expected content, content bricks should be provisioned that maybe assigned as empty containers to be later filled throughout organizational processes using the domain model.

In rare circumstances an employee enacting a PBB may run into a situation where a certain information is acquired that has not been foreseen in the PBB or related domain data nodes. In such situations, it should also be possible for a user to select a suitable content brick and document his findings. In such situations, the selection might be limited to a certain subset of content bricks available in a certain section of the library.

Typically, object definitions are provided as programmatic entities, compiled or to be interpreted files for the executing runtime environments. In classic systems these would be files in a files system. In the context of the method and system herein described, however, there is envisioned the possibility to handle a large number of object definitions at a given moment and a limited number would be relevant for programmatic execution. As the system and method herein described may be designed in particular to run as a distributed application/cloud-based application, the system architecture may want to cater for efficient distribution of content brick class definitions that are situationally delivered to the user clients.

As described, the system and method herein described rely on the existence of numerous domain data models suitably modelling knowledge to be built up alongside any organizational process addressing a certain commercial target, product or deliverable. One or even several of these models might be assigned to a project enacted by the process management tool. As described, these domain models are to be modelled in the form of trees (graph models). Trees themselves consist of branches that can be arbitrary aggregated to larger entities finally forming the tree. Implementation systems and methods to organize all these tree nodes and branches in a domain model library exist. A base library in such systems may hold a flat list of node objects out of which the branches can be composed. An improved system and method, according to the present description, might have the possibility to provide a structured base library that sorts the base nodes in families and allows the nodes to be contextualized with meta-information (IDs, tags, descriptions, sorting identifiers, etc.; Base Library Ontology). A part of the domain model library is the library of template structures. Nodes connected to each other forming branches should be able to be stored as templates. Branches connected to each other are templates in the library on higher levels. Complete domain models consisting of an arbitrary aggregation of branches are the top-level templates that would typically be selected at project instantiation and assigned to it. If the domain model needs to be modified throughout the execution of a project, the domain model is typically altered by deleting branches that are not needed or, under certain circumstances, by adding branches that are readily available in the template library. This requires a template library that again allows a suitable contextualization of prepared templates providing the means to define meta information such as tags, descriptions, identifiers, family relationships, etc. (Template Ontology).

Therefore according to embodiments of the present invention, each type of data model forms an ontology, wherein the data models are searchable based on one or more tags, and wherein domain data models comprise searchable template ontologies

Within an envisioned implementation of the method herein described, it is intended to be possible to provision contents within domain data model templates. For nodes in templated branches or templated domain data models, it must be possible to prepare expected content bricks. These content bricks act as identifiers that certain contents have to be acquired for dedicated modelled nodes. As content bricks are designed to be feature-rich objects, they allow to display keys or descriptions, units of measure, etc. For this particular application, the bricks, however, may be rendered empty or at least partially empty. Practically such a provisioned content brick, for example for a node called "engine" might be "power" measured in the SI unit "Watt", but in the template the actual numeric data, depicting the amount of Watt of the engine, still is left blank. Working on a project with a particular domain model assigned, provisioned contents hint for the acquisition of dedicated data and information to be acquired for the projects. Such provisioned content bricks must have the functionality to specify whether they are required to be filled out and content checked (valid logical data verification at input) or not. If they are required, missing data inside the bricks should be highlighted or indicated in data model reports. Missing data in required content bricks may also fail or prevent finishing related PBBs during process enactment or throw a related event. This is to avoid an inadequate execution of defined work packages in PBBs and to assure that data and information is adequately built up during the enactment of a project to support the execution of the related business process. Such provisioned content bricks, however, could also come with partial information or complete information. As an example, in some cases we expect certain materials to be used for certain components - for diffusion discs in Jet Pumps and House Water Works we expect and only accept metal discs. Thus, we would provision a content brick, depicting the material of the diffusion disc to be expected as "stainless steel". In such cases, during project execution, only the actual material needs to be acquired and filled in and, to this point, it then would be possible to check whether the actual value is fulfilling the expectation by a logical check, that might be implemented in the engineering domain by so called "design guidelines".

In other situations, content bricks for certain branches maybe completely filled out. In these situations, the provisioned content bricks provide situational contexts within a domain model. They act as a definition of the situation, they describe for example, which conditions have to be established at PBB execution (in a domain model for example describing qualification tests to be carried out for a lab qualification project, such provisioned and completely filled out content bricks may define ambient temperatures or humidity, etc. that have to be correctly adjusted before, for example, a heat test or a durability run is to be carried out). These types of content bricks are called "definition content bricks". With these means, the user, enacting a certain PBB does get clear instructions for the fulfilment of the related work package of the PBB, in relation to the assigned domain model. In addition, such provisioned contents can be used by the process control mechanisms of the method and system herein described to control routing decisions (for example to control, whether a certain PBB gate is open or not, or to support the automatic selection of a follow-up PBB at a certain gate).

Provisioning contents should be able to happen on node level (whenever a certain node is used in any branch template or domain model, provisioned content bricks are applied), or within nodes, belonging to a particular branch template (the provisioned contents are only applied to a given node in the domain model, if the node was added by using the defined branch templates). Templates aggregated out of several branches and sub-branches aggregate provisioned content on node levels and on branch levels from their sub-branches as well as provisioned content bricks, dedicatedly defined for the aggregated template.

As described earlier, content bricks are typically assigned to PBBs during the design phase of a PBB. In such situations, content bricks are selected and their queries are configured accordingly. Queries hereby can be configured to either act on the process data model or the domain data models. In a typical application, thus, provisioned content bricks in the domain data model are found from within the PBBs at enactment time by executing the queries of content bricks, provisioned in the PBBs. After query execution, these provisioned content bricks in the PBBs display the contents already existing in the domain data model. In a second scenario, the user should be pointed to select one or multiple nodes that he is working on while enacting the given PBB. While this is not necessary for all PBBs, during the design phase of a PBB it should be possible to configure a PBB with the need to link dedicated nodes from the domain data model. In later phases for such PBBs the selection of related domain data nodes could also be automated by prepared queries or node searches in assigned domain data models. In such situations, the PBBs content pane should be showing content bricks not only prepared by the PBB itself but also all those content bricks, provisioned or available in the assigned nodes of domain data models. When it comes to a point where data is persisted during the enactment of the PBB, all acquired or modified contents for content bricks assigned from dedicated nodes in domain data models, have to be persisted and versioned automatically on the related node in the domain data model. At the same time, as the acquisition or modification of data has been happening during the enactment of a dedicated PBB inside a process tree, the retaining of acquired data and information may be envisioned to happen simultaneously in the representing node for the given PBB in the process data model.

Where data acquisitions or data modifications in content bricks are always documented with date and time stamps as well as the PBBs, within which acquisitions / modifications have been happening (path to representing PBB node in the process data model) and the user carrying it out in the domain data models, the persistence in the process data model has to be documented with a link to the related node in the domain data model (path to the node in the domain data tree).

As already mentioned earlier, in the implementation of the method and system herein described, it is possible to include so called "design guidelines" in the domain data model for the method and system herein described. In a similar manner the possibility to implement domain guidelines together with domain data model templates in future versions of such method and system may be included. Design guidelines may operate on provisioned content bricks just as explained above. They are again either prepared on domain nodes or on branch templates. The aggregation of guidelines happens identical to provisioned contents. Domain guidelines may be implemented by using provisioned content bricks directly. Provisioned content bricks, implementing a design guideline just have an additional set of logical checks implemented, that evaluate when new data is acquired, or existing data is modified. The logical checks in the prepared set that implements a domain guideline must be able to be linked with logical operators (and, or, xor) and finally lead to a true or false result, indicating the domain guideline is obsolete or failed. Content bricks implementing domain guidelines have to implement a small guideline state model, indicating, whether the relevant set of data is not yet available, the available set of data indicates the implemented domain guideline is passed or the available set of data indicates the implemented domain guideline is failed. The domain guideline state is a data unit made available by the content brick, that is to be displayed in the content brick's content representation (content brick GUI) as well as it is available for process control decisions when it comes to finishing a PBB, deciding, which gates of a PBB are open or deciding on follow-up PBBs to be selected for a gate.

It is helpful to notice that not only are their multiple domain data models provisioned in the domain data template library but also will there be the need that multiple of these domain data model templates are then selected and instantiated with a project. To this point a project may have 0, 1 or several domain data models assigned. The assignment of a domain data model does not necessary need to happen at project kick off but domain data models maybe added while a project is already under enactment.

According to the present invention, and herein through the description, the enactment step of the method herein described requires execution through an enactment engine.

The enactment engine according to the present invention is responsible for the control flow of the processes. This includes the instantiation of domain content data model and process content data model as well as the creation and assignment of tasks.

From a computational point of view, the enactment engine may be understood as the run time environment for the declarative processing. It runs the processes. From this perspective, it plays a central role in the application across users and work resources. It implements all necessary process control mechanisms and executes them. For user who have permission to start new projects, it provides the entrance points to kick off a new project. On the user side, it may be tasked with implementing a suitable graphical user interface (GUI) to support day-to-day operation and work with the system.

The user interface may be tasked with implementing task lists with all required functionalities enabling them to be operated or undertaken or addressed by operators of the system and become manageable by users. It might make all tasks capable of being visualized tidily, together with making sorting functions available. The ability to reschedule a task as well as possibilities to re-assign tasks, forward tasks to other user resources, where allowed, may be graphically supported.

Message board functions containing important messages for a user may be available in a prominent position, for example next to the task list, right on the top menu of the enactment engines user interface.

Global Search functions are intended herein to provide access to projects, content models, data, etc. From here Manuals and documentations, training materials, a Wiki related to the method etc. might be envisioned as being accessible, too.

In a prominent position within a chosen interface, for example available on the top menu of an enactment engines GUI an access point to projects, to their process and domain data models might be envisioned. Which projects are shown in an initial view might be a configurable option intended to be carried out by any given user independently. Project Blogs/Chats might also be provided within the same frame. For users with more sophisticated roles a top menu might be implemented, to provide an access point to template libraries for domain data models, content brick libraries and PBB libraries.

Depending on the privilege level of the signed-in user, the top-level menu of the enactment engines GUI may be thought to have an access point to a set of prepared reports and/or widgets that indicate defined KPIs relevant for the user.

On lower levels, the GUIs as herein intended, may enable the user to handle searches and navigate through process trees or domain data models. From there they might be constructed so to enable to drill down to details. On PBB levels, node levels or brick levels users should be able to select, and copy required elements. For users with the right privilege level, they should be able to paste elements into different structural positions or for example into the content pain of a PBB that they are currently working on. For such operations copy and paste methodologies might have to be worked out, so that data consistency is maintained.

In a setting section, users should be able to configure their top-level menu, their reports, their widgets, etc. Resource related settings should be easily taken care of in the GUI of the enactment environment. This includes definition of substitution users, off times, holidays, etc. At this point the user should also be able to look at its associations into the organizations organigrams, the list of additional qualifications, skills, capabilities, owner ship of PBBs, etc.

According to embodiments of the present invention, the data structure of data models comprises directed acyclic graphs (rooted trees).

The data structure of all types of data models may be implemented as directed acyclic graphs (rooted trees). An advantage of this type of structure is that it will be unstructured, therefore not stable and may be subjected to modelling. Such data could then be modelled in a way that users can access (address the data for read and write operations) in the same fashion, and according to the method herein described.

According to embodiments of the present invention, each project of the plurality of projects is associated with one or more data models.

This allows exchanging modelled process building blocks to be utilized across a large number of projects to deliver a number of different products.

According to embodiments of the present invention, each type of data models forms an ontology wherein the data models are searchable based on one or more tags, and wherein domain data models comprise searchable template ontologies.

A domain data structure model may comprise multiple different data buckets, which might then build up on each other. A common feature that might be shared among all domain data structure models and which turns useful for rapidly addressing the arranged data, is that data structure models may be organized in a library or ontology and searchable by tags that may by design characterize such data. Each domain data structure model can have multiple tags.

According to embodiments of the present invention, the domain data models comprise fundamental and user domain data structure models, wherein the user domain data structure models are accessible to users, wherein users comprise work resources.

A fundamental domain data structure model may represent data structures created by IT developers and it is not intended to be modified by users in any way. Those data structures may represent very basic data structures like a key value pair data structure.

According to embodiments of the present invention, the fundamental domain data structure models provide access to third party applications data structures.

In the meaning of the present invention, therefore, in this data bucket, data structures from third party applications can be made available. Further information in this respect may be found later under the description of data sources.

The Domain template data model may serve as template for a knowledge structure (hierarchical semantic structure within which data is organized) in the application domain within which managed processes should be applied by the herein described method. The knowledge structure can be created by a dedicated set of users. It is based on the Aggregate domain data structure model and Semantic domain data structure model. A Domain template data model can be built with multiple domain or semantic domain data structure models.

Also on the domain template data model individual users may be granted access on the domain template data model. This may control in particular whether the user can use the data structure. This may not imply that the user has a PBB suitable for accessing the data structure.

The domain content data may be used within a process as herein described and contains all the entered values via PBBs by users within a specific process. The structure of the domain content data models may be based upon the selected domain template data models (prepopulated) which were selected/assigned at the start of a process or later on. The structure can differ in later stages of the project from the original structure of the Domain template data models because a dedicated set of users changed the structure to comply with the factual project content/physical knowledge structure and its representation requirements of the current project. In addition, it must be possible to grant access to users, which were not foreseen at creation of the Domain template data model.

Process content data models in the meaning of the present invention may be used to store all the information derived in the process work packages (that might already have been stored in the domain data models - potentially as reference only) and any other information relevant to the process progression. Moreover, the following data may be stored in the process content data model, such as actual times (resource times, process times), processor of the PBB, state of all PBBs, process documentation, internal & external monetary costs / expenses.

A dedicated set of users has access to the Fundamental domain data structure model and can create domain data structure models with semantic meaning. This domain data model bucket is completely in the responsibility of the set of dedicated users within the method of the present invention. All other domain data structure models are built on top of that and must not have direct access to the Fundamental domain data structure model.

According to embodiments of the present invention, the data models are based on graph-structured databases having a tree structure with nodes and edges, and wherein, in process data models, process building blocks represent nodes, and edges represent links between the gate of one process building block to any one or more other process building blocks.

In a similar understanding, in embodiments of the present invention structure data of data models comprises directed acyclic graphs, wherein therefore a series of items relating to structure data in data models are interconnected and may, for example, be assigned relationships amongst them.

In the meaning of the present invention, any database may be used. Graph-structure databases have the advantage of enabling implementation of the modelling steps wherein connections and logical connections are or might be formed more easily to allow the building of knowledge databases with intricate, yet accessible relations among their members.

According to embodiments of the present invention the method herein described is capable of operating on a cloud-based system, preferably runs within a browser window and is easily accessible and usable by a number of computer systems, comprising access and usability through mobile applications.

According to embodiments of the present invention, a non-transitory computer-readable medium comprising instructions is provided which when executed by one or more processors cause the one or more processors to perform the steps of the method of the present invention.

According to embodiments of the present invention, a process building block handling system for implementing the method of the present invention is provided, the system comprising the non-transitory computer-readable medium previously mentioned, a process building blocks library, an enactment engine and a content engine.

A content engine, as may be derived from what mentioned above with regard to content, content models and content bricks, and in analogy with an enactment engine, has the function of supporting documentation and information processing within the present method and system. It can be understood as a room or warehouse, wherein all process contents are stored that arise during the processing of the PBBs across all the method steps and along any process. Those prints that are left behind during the run of processes may be stored by the content engine in a form accessible to the system users. For example, entered KVP values may be displayed (see Examples). The content engine may be embedded in existing ERP systems. In this case, the language model, which represents the input for the content engine, may be kept relatively simple. In such a circumstance, it may be implemented as a classic key-value system with a predefined number of columns and associated values. Different views from the content "warehouse" of the project can be individually compiled in a matrix view.

According to embodiments of the present invention, a data processing device comprising means for carrying out the steps of the method is provided, wherein the data processing device is taken from a list of any device with data processing capabilities suitable for carrying out the steps listed in the present document.

According to an embodiment of the present invention, a process building block handling system for implementing the method as herein described is provided, the system comprising the data processing device, the non-transitory computer-readable medium and a process building blocks library, an enactment engine, and a content engine as mentioned and described above. The meaning of process building block in the understanding of the present invention has been clarified throughout the document and therefore the process building block handling system in its operation is intended to refer to those definitions and explanations.

According to further embodiments of the present invention, a computer program is provided, comprising instructions which, when the program is executed by the data processing device above, causes the device to carry out the steps of the computer-implemented method as described herein.

In the following, the invention as herein disclosed will be described through some figures and examples, with the only purpose of showing how to illustrate some abstract concepts and how some of the features herein discussed may be implemented. The figures and the examples herein provided are not intended to limit the disclosure of the present invention in any way and are brought forward only with the scope of clarifying certain implementation and properties of at least some of the features of the present invention, and/or to show or suggest additional functionalities.

Figure 1. System structure

Figure 2. PBB library system structure

Figure 3. PBB library screenshot

Figure 4. Example of roles from product management

Figure 5. Role and PBB relationships

Figure 6. Examples of users assigned to product codes

Figure 7. "Duty list" task list

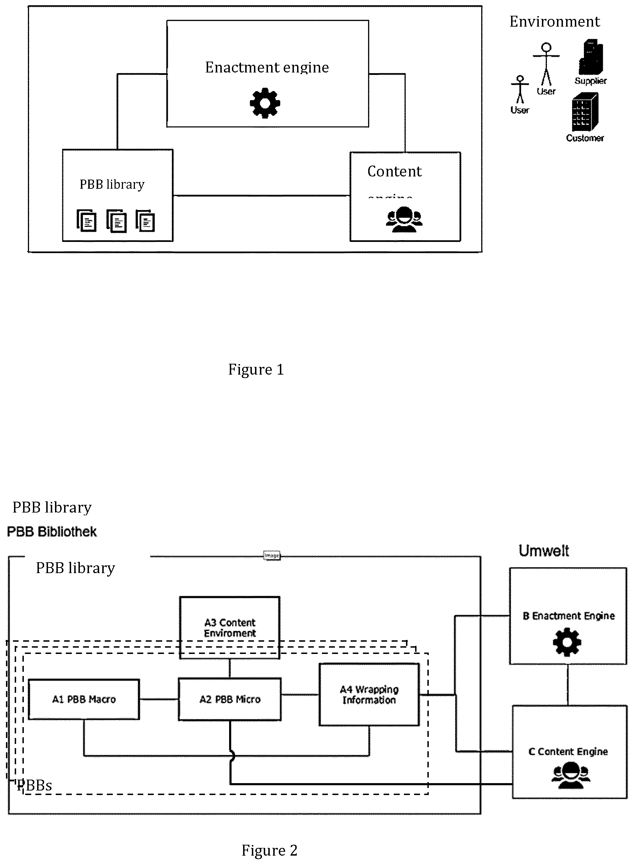

Figure 1 is concerned with a conceptual illustration of the system fundamental structure as intended to implement the method herein described. A PBB library, an enactment engine and a content engine are represented in their structural relationship with each other. Example 12 provides a more in-depth description and implementation of the enactment engine.

Figure 2 shows a representation of the inner structure of the PBB library, as described above, and as intended in a possible implementation of the method herein described and within the system of figure 1. An illustration is shown of the content environment, the macro and micro level of the PBB as herein described, within their relationship to the enactment engine and content engine within the system as envisioned according to the present invention.

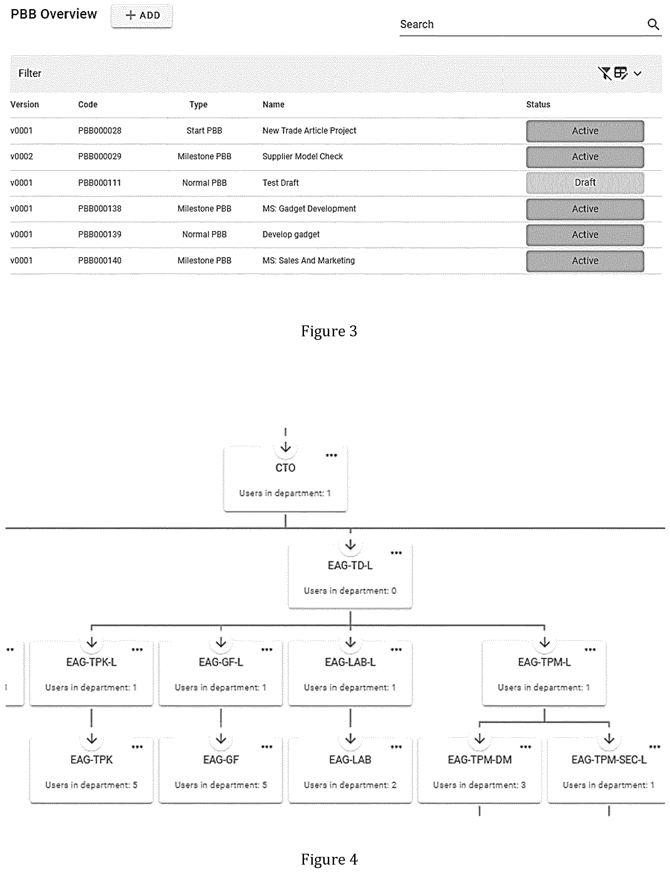

Figure 3 shows a screenshot of a typical possible implementation of a PBB library as intended according to the method of the present invention. The PBB library contains the so-called PBBs (process building blocks) as defined throughout the application. In the project context, a PBB can also be described in a simplified way as a work package or as the (work) ability / capability of an employee or work resource, as explained. In the context of the method as herein described, these may represent modules from which process chains are formed when stimuli are received. They represent the capability and the action concepts of the project resources.

Figure 4 shows a screenshot of an example of designation of roles at the enactment engine level, as also described in Example 12. The designation was based on the users' respective areas of responsibility. The parent company alone therefore lists more than 100 different roles within the system as herein described. In a second step, the users were assigned to the roles. The screenshot of figure 4 shows the role of the product managers in short form called "PM-EAG-PM". In the column "Assigned users / role / group" it can be seen that 21 users (= 21 product managers) are assigned to this role, as an example.

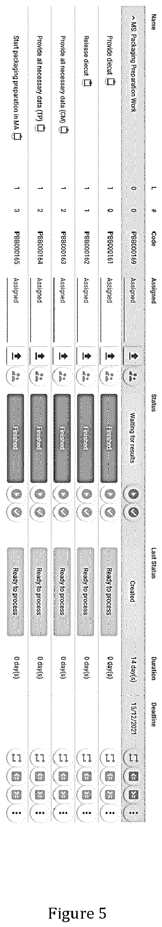

Figure 5 also refers to Example 12 and shows a screenshot representing an example of role and PBB relationships, wherein the roles are hard-wired to a PBB.

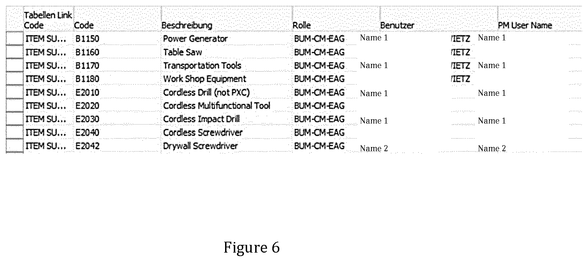

Figure 6 also refers to Example 12 and shows a screenshot representing an example of users assigned to product codes. As shown in figure 5, the roles are already hard-wired to a PBB: here is shown that the users in turn are wired to product codes. The product code should preferably be filled in the mask before the project starts. Thereupon the explicit user selection can be made by the Enactment Engine.

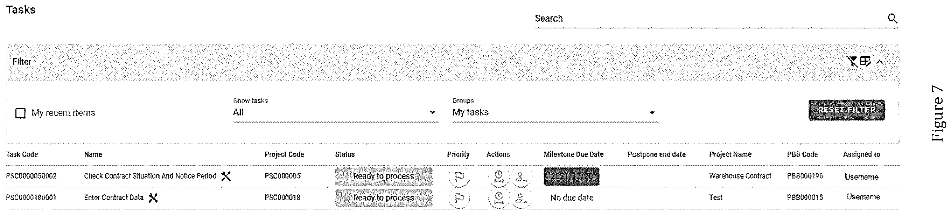

Figure 7 also refers to Example 12 and shows a screenshot representing an example of "Duty list" task list. The to-do lists are provided for all users in a visual form. In this list, the blocks that are due for processing are first displayed on the macro level.

Examples

Example 1 - PBBs properties and activity implementation

Process control handover

The process control handover is defined per gate. The process control handover can either be specified as friendly or unfriendly. Friendly means that the processing result of the successor PBB is of interest, this means the result of the PBB execution is to be evaluated or waited for, before the PBB can be considered to be finished (see status model) or the next gate can be triggered. Processing results of successor PBBs whose gate is defined as unfriendly are not of interest (fire & forget), this means that unfriendly triggered gates are considered "processed" as soon as they have been invoked.

Gates defined as friendly can furthermore be specified as synchronous or asynchronous. Asynchronous gates allow the following gates, even gates with higher sequence number, to be triggered without the processing of the current successor gate having returned with a result yet. The PBB itself, however, cannot be finished successfully without all asynchronous friendly gates having returned a result yet (see status model). Synchronous gates force the PBB to halt opening gates with higher sequence number until the current subsequent PBB has returned a result.

Friendly and unfriendly gate configurations can be mixed at will.

Gate conditions

For each gate it is useful to store conditions as to whether a gate opens or remains closed. The conditions may be defined as rules. The data for the conditions comes from the process data model or domain data models. Time constraints for opening / closing a gate should be able to be modelled, too. It is necessary to be able to add constraints that previous gates have been opened / closed.

It is useful to configure the maximum amount of iterations / retries of a successor PBB per gate. If the maximum is reached, then no more execution of the PBB behind that gate is possible anymore. To this point, at least an event should be thrown that can be handled by the event management system. Additionally, a compensation action should be able to be configured.

PBB interception

In each gate, it must be possible to configure whether the successor PBB behind the gate starts automatically or a separate Task is invoked in which the gate setting is configured (start the successor PBB behind this gate or close the gate again without starting the successor PBB). This is to skip a single gate manually by evaluating the situational context.

Another form of PBB interception is to invoke a task for the PBB as soon as the successor PBB is finished to decide whether successor PBBs with higher sequence numbers should start or not. This again needs to be configurable on gate level. This is to skip execution of one or more higher-level gates based on returned results in cases where this decision cannot be automated via conditions.

PBB repetition

To enable multiple instances of a successor PBB it must be possible to define per gate the amount of instances and whether they should get executed in parallel or in sequence. The amount of instances can either be configured with a fixed value or taken from the process data model or domain data models.

PBB status model

PBBs may have a separate technical state model with corresponding transitions. All PBBs shall have the same state model definition. All state transitions may have the ability to be commented if a user interaction triggered the state change. The following list shall be regarded as a list of preliminary examples - in a detailed technical specification, the state model to be implemented might be further developed.

At least the following states may be comprised:

- Created
  ◦ Initialized and added to the project's process tree model

- Waiting for parent
  ◦ PBB is waiting for parent element to complete its task(s)

- Waiting for sequence
  ◦ PBB siblings with lower sequence numbers still have open task(s)

- Waiting for event
  ◦ Gate in front of this PBB has an event condition that is not yet met

- Canceled
  ◦ PBB got canceled before it was "Ready to process"

- Ready to process
  ◦ PBB is ready for enactment by the user

- In progress
  ◦ User is in the process or working on the task

- Postponed
  ◦ Further processing of the task is currently postponed until a certain reminder date

- Micro-level finished
  ◦ User has finished to work on the task

- Aborted
  ◦ PBB was in a processing state but got aborted before it was in a final state.

- Retried
  ◦ Another instance has been created, which is executed as a "retry"

- Suspended
  ◦ Further execution is currently halted

- Waiting for results
  ◦ Waiting for results from subsequent PBBs in the PBB tree

- Ready for review
  ◦ Results from subsequent PBBs are available and review task(s) are ready

- In review
  ◦ Review in progress

- Review postponed
  ◦ Further processing of the review task is postponed

- Review finished
  ◦ User has finished to work on the review task

- Finished
  ◦ PBB itself completed and all friendly synchronous and asynchronous successor PBBs closed with a final state

- Failed
  ◦ PBB failed due to some reason indicated by the specific context of the project, such as a value that was entered during task execution not meeting a required standard, or some other reason

- Obsolete
  ◦ PBB has become obsolete after a repair action took place

A PBB in a process is active (-> neither finished, failed, nor aborted / cancelled) until all subsequent PBBs are finished. Because of this, a separate status model for users may be used for the Tasks.

With every state transition, in order to detect process data changes automatically it is advisable that the conditions of the gate and the PBB are checked again.

In addition to processing-related states, PBBs should be able to be assigned static states that depict whether or not they can already be used in processes at all ("active") or whether they are still under construction ("draft") or already outdated ("deleted"). There might be additional static states required to handle PBBs in libraries.

Aside from the PBB state model the process itself must inherit process states to be managed in a separate process state model.

PBB simulation

Simulating the behaviour of PBBs in a test setting with predefined input sets and expected output sets may be envisaged. starting from testing PBBs in isolation (like unit-tests), until complete processes can be tested in a reasonable fashion.

Control flow

The control flow of a process is determined by the defined successor PBBs in the gates. A successor PBB always reports back to the previous PBB (for unfriendly handovers, the result of the successor PBBs however is ignored). A PBB therefore remains technically open until all friendly successor PBBs whose gates have been opened are not active anymore (see PBB status model).

There may be two cases for the notification (back reporting) to the predecessor PBB:

- PBB finished

- PBB failed

If a successor PBB has finished (successfully processed), the next successor PBB can continue. If no further successor PBB exists, the corresponding PBB reports finished to its predecessor.

Example 2: Content Bricks

Content-Bricks have properties coming from the Fundamental domain data structure model or other Content-Bricks. Properties in a Content-Brick may be addressable using appropriate language, for example with XPath (XML Path Language) e.g.:

- /A/B

- 
$$A//B/*[1]$$

- child: :A/descendant-or-self::node()/child::B/child:: *[position()=1]

A property is in its simplest form a "key" and a "value" but can also be a more complex object structure like a list of values or nested / compound properties. It must be possible to rename properties (i.e. the label of the key) and provide localization.

Each property may be aware of the data type of the value and provide corresponding additional options like predefining constant values, constraints on data types (ranges for character, numeric, date and time types), validation rules (Regular expressions and embedded script language), settings for visual formatting. Additionally, it might be possible to define computed properties in a content brick. Computed properties are properties which have one or more other properties (this also includes other computed properties) as value source. The resulting value (which is a read-only value) is computed based on the source value with an embedded script language. The datatype of the resulting value must conform to the result value of the embedded script language and must not be ambiguous.

In the system based on the method as herein described, it may be useful to introduce possibilities to utilize events in any way. This system may have a specifically defined event architecture and may therefore encompass from the beginning the possibility of being prepared for events and how to handle them. Such system may therefore comprise a suitable event management architecture. As described in the section where process building blocks and their functionalities have been introduced, a dedicated state model for PBBs may reveal beneficial for such systems. Some of these states are of a "waiting" type, dedicated for a halted execution. In such states, PBBs could be waiting for events to be triggered. In this way, the execution of branches of processes could wait for each other. In other scenarios, events could trigger the re-evaluation of PBB execution results that have already been happening previously. In again other scenarios new projects could be triggered, etc.

The content brick object may represent a useful role within such an architecture. The content brick objects could provide the necessary functionality to throw events after certain data has been acquired or existing data has been modified in a dedicated way.

Events could be thrown immediately after data acquisition or data modification or events are thrown after logical checks, similar to the concepts discussed under domain guidelines, have been evaluated and come to the result, that an event should be thrown. Both methods are implemented in the architecture of the system's data model design/in the content brick object model.

Example 3: Fundamental data structure model "KVP"

Fundamental data structure model "KVP" may be used, e.g., to create the semantic domain data structure model, e.g., "Voltage". This example definition represents an option that could be possibly implemented. To this purpose, the KVP fundamental data structure may provide this functionality for a correct implementation according to the following:

- Name
- Tags
- Value
- Datatype of value
- Unit
- Min / Max value
- Tolerance type (percentage / absolute)
- Tolerance range

Aggregate domain data structure model

A dedicated set of users can create aggregate domain data structure models which are based upon the Semantic domain data structure model. An aggregate domain data structure model can be built with multiple semantic domain data structure models.

Example 4: User crediting data model

User crediting function

The user crediting function computes for every user according to the Task assignment a score and assigns the Task to the user with the highest score. The crediting function might look like a standard function such as

$$S(P,U) := \Sigma wid(P,U)ini$$

where

- S is the weighted score for the user
- P is the process data model
- U is user
- w is the weight for the decision table

This crediting function would be typically editable with an embedded script language and might look something like this:

$$1*dt[\text{`customer'}](p,u) + \ldots + 0.75*dt[\text{`projectType'}](p,0)$$

It could typically also be possible to store a variant of the user crediting function for the process itself, which gets preferred over the "global" user crediting function.

In the method herein described users and/or work resources are assigned to project roles, based on information that is acquired in very early steps when a project is initiated. For example, the type of a product that has to be developed in a development project, leads to the assignment of relevant project engineers, being expert for the given product type, namely whose capabilities are specific for the tasks requested for the project at hand. A conventional approach might be in a sense rigid and require manual interaction when it comes to, for example, unavailability of certain project work resources. According to the method of the present document, the system environment enables automated handling of automated resource assignments to PPBs and with it provide enough flexibility in any given situational context. The PBB, based on the information associated with it, and self-contained, will allow to define how suitable resources may be selected. In this example, it is proposed to implement this selection of suitable resources by allowing the PBB creator to define a crediting function that computes the suitability of an employee, a user or a work resource by evaluating the situational project context (data and information, collected in the data models) deriving a score for all available resources, of for a subset of said available and suitable resources. The most suitable resource may then be assigned, based on the score obtained. In a practical implementation it may be done as follows. To assign tasks to a user a user crediting function is used. The data model for user crediting should consist of multiple decision tables (like DMN - Decision model notation) which is used by the crediting function to determine a score.

The table represents such a decision table. In following examples, the process has a specific variable for the customer set and all users in the decision table are allowed to work on the process:

| | User | Customer | Score |
|---|---|---|---|
| | | "Cust1","Cust2","Cust3" | |
| 1 | User1 | "Cust1" | 10 |
| 2 | User1 | "Cust2" | -100 |
| 3 | User2 | "Cust1","Cust3" | 8 |
| 4 | User3 | - | 5 |

Customer "Cust1"  Customer "Cust2"  Customer "Cust3
1. User1: 10     1. User1: -100    1. User2: 8
2. User2: 8      2. User3: 5       2. User3: 5
3. User3: 5

In the decision table, it is useful to access data from the process model as well as some specific values like "Amount of completed PBBs". "Amount of completed PBBs" is needed to prefer users, which already worked on PBBs within a process.

While modelling a Start PBB, the columns of a decision table can be referenced so that at the start of a process the values can be filled accordingly. The reference may consider the datatype. Moreover, if the referenced column represents a list of possible values those must be selectable during the process execution.

Example 5: Domain data models.

For product development processes typical domain data models would be product related. They might be for example system related models along which data and information generated throughout the project is acquired. For each product group, related domain data model templates would be built up. This would be separate models for angle grinders, impact drills, jig saws, lawn mowers, garden pumps, tillers etc.

At the same time, however, throughout such a project purchasing information and master data may be acquired from the appropriate source, according to the organization structure. Depending, for example, on the country of operation, the sourcing model, the related customer, etc. separate purchasing domain model templates may be prepared.

When it comes to a product qualification this may be carried out in a subsidiary lab, for example in a subsidiary location of an organization. Using the system and method herein described, several different families of qualification schemes may be implemented . A first family concerns safety qualification templates. These templates may depict the different standards that are required to be fulfilled by a typical product class. This would for example be standard safety for handheld power tools, standard safety for stationary tools, standard safety for garden tools etc. The second family would be domain models for function and usability tests such as function and usability impact drill, function and usability jig saw, function and usability lawn mower, etc. When it comes to the enactment of a real project, the project always has the assigned process data model available to store and retrieve data. In addition, from beginning on, a certain system product class template would be instantiated and assigned, for example a system class template designated as "impact drill". In addition, one or several purchasing domain data models may be assigned. In a qualification phase it would be useful to assign several qualification domain data models such as safety handheld power tools and function and usability impact drill etc.

Merging domain data models

In the system based on the method as herein described, the possibility exists to merge domain data model templates before they are applied. A system template for different product groups may be implemented, as mentioned above. In addition, brand templates, country templates, etc may be provided. These secondary templates use the same base template libraries as the system main templates. On brand templates or country templates however provisioned content bricks for a dedicated brand or a dedicated country are collected. Before the instantiation of the domain data model the templates selected are merged meaning that the provisioned content bricks (such as KVPs) are added to the relevant nodes from all selected templates. In case of conflicting identical content bricks, the user merging the template has to take a decision which of the content bricks is actually added to the domain data model that is to be instantiated for the project.

Content model reporting

As mentioned earlier, it is important that contents of a node of one of the content models can be adequately presented. Within a PBB, content bricks have to be compactly reported to provide a crisp overview. GUI functionalities have then to enable users to drill down and mine for in-depth contents, which comes with the need to enlarge the user interface of the related content brick. Under certain circumstances, it might be necessary to open dedicated windows to further drill in or to ease data acquisition or data modification. For a single content brick, thus several levels of detail and size of data representation have to be worked out.

Several users working with the method and system as herein described, team leaders, department heads or project leaders for example, have the need to look at things from a bird's eye view. They for example will have the need to obtain a summarizing report to a project/process evolvement. In such cases, they want to see data of dedicated nodes and the structure of the process data model as such. Such nodes could be milestones or other PBBs that carry dedicated markings for such purposes. Next to reported nodes and their structure (tree), there might be the need to also summarize certain contents. This should be facilitated by markings or tags that we add to content bricks so they can be selected for display in summary reports. We have to bear in mind that summary reports will have to take different perspectives. There are summary reports visualizing the state of all running projects or all finished projects or all projects in certain states of a certain domain. There are summary reports that have to visualize only a number of projects, a subset of all existing projects, for example running project relevant for a certain resource, with a certain assigned domain model, etc. Such summary reports are typically intended to visualize process flows and contents in a very compact form.

Other summary reports should visualize on a single project while still having the need for a compact visualization here already more details on contents might be suitable. Again other summary reports will need to focus more on domain related aspects, for example summarize domain contents of multiple projects by a compact visualization of their domain data models. Other summary reports might need to visualize the domain data model of a single project.

The architectural design of content brick objects and related object models need to facilitate such reporting. In addition, the architectural design of the system might want to integrate out of the box reporting tools for the implementing data base systems so the power of standardized or commercial report builders in our visualization tools, cube ware systems, etc., may be employed.

The method and system as herein described may comprise the possibility to create a variety of reports called "Matrix Views" that users can configure and create by themselves according to their individual specific needs, in a way that can be further improved. In addition they can create outputs to MS Excel in pre-defined templates that already contain advanced reporting and visualization features. Both elements may reveal beneficial for user acceptance and may be comprised by default, implemented or modularly selectable in further developments of the system and method as herein described.

Example 6: User/Resources-related Operations

Users, Authentication and Authorization

User accounts may be utilized to access the system based on the method as herein described. User accounts may be grouped in user groups where one user account can be in multiple user groups. Roles are applied to user groups and therefore authorization rules for the system and methods herein described may be enforced on user groups.

User account

User accounts are required to access the system based on the method as herein described and represent one specific login for a human or another application. The authentication shall be done by a third party in order to provide SSO capabilities. What a specific user account is able to do is managed within the the system via User group and associated Role.

Information regarding the user account is split into three types:

- User can edit information itself

- Separate Role is required to edit information

- System generated information

Information a user can edit itself:

- Language

- User is temporarily unavailable

Information, which requires a separate role:

- User working hours

- User is blocked

- User is temporarily unavailable

- Qualifications

- Organigram association

System generated information:

- Last login

Organigram

Each user may have an association in an organigram. It is necessary to have multiple organigrams to represent the structure of the organization. The organigram is used by superiors to be able to see which employees are working on which projects/tasks.

User groups

User accounts are grouped into User groups. Within the system based on the method as herein described it may be possible to create User groups and assign Roles to the User groups to improve operation and accessibility.

Role

Roles are predefined and cannot be changed within the system based on the method as herein described. They are used as access control to grant access to specific functionalities within said system. The access control must be additive.

The following (not yet complete) list represents some roles which may demonstrate beneficial across organizational use of the method as herein described:

- Admin

- User

- Role for modifying User role associations

- Role for blocking users

- Role for making users temporarily unavailable

- Role for creating / modifying / deleting additional skills

- Role for creating / modifying / deleting additional skill relations

- Role for creating / modifying / deleting User capability groups

- Role for modifying User capability group associations

- Role for modifying User capability associations

- Role for modifying Semantic domain data structure model

- Role for modifying Aggregate domain data structure model

- Role for modifying Domain template data model

- Role for modifying Domain content data model

- Role for designing PBBs

- Role for Additional Capability Requirements

- Role for Cross projecting

- Role for Substitution arrangement

Substitution arrangement

Users may define one or more substitutes for themselves. If a user becomes unavailable then the substitute is able to see all the Tasks and is able to work on those as well. The substitute "inherits" the capabilities of the user until the user is available again. This behaviour must cascade. The substitute might choose not to work on the Tasks but to delegate them to another capable user (see Delegating tasks).

Capabilities

Capabilities represent a specific skill set required in order to be able to work on a PBB. The Enactment-Engine uses the capabilities for the Task assignment in order to determine next candidate users for the PBB during the execution of a process.
Each PBB maintains exactly one capability. One capability may have multiple versions though. For every capability version, following information is required:

- Qualifications to be obtained by user

- Constitution / definition of capabilities (which qualification entities are required for a capability)

- Qualification can expire

   o Qualification expiration in days
   o Qualification training duration

The owners of the PBB respectively a PBB maintainer manage a capability for a specific PBB. A new version of the capability must be created at their will.
Qualifications are regarded as an independent entity that can be obtained by a user through training and examination, etc. Obtained qualifications are stored on user levels. Qualifications may be expiring based on time schemes. The time schemes may be altered if PBBs with capabilities constituting out of a given qualification are enacted by the user. Capabilities require a certain set of qualifications to be obtained by a user in order to be regarded existent.

Qualification and capability maintenance interface

Qualifications and related capabilities have to be easily managed in suitable qualification libraries and capability libraries. Managing associations between capabilities and qualifications as well as managing the libraries shall be supported by an easy-to-use maintenance GUI. This has to be done by users having the role for modifying these associations (e.g. "Instructors").

Capability Management

In an industrial organization it is beneficial to assign tasks to users that really know how to carry out those task and the required work packages. In the context of a process assembly tool, the capability management can be institutionalized. This may be already done with the system based on the method as herein described.
Every PBB basically reflects a capability that the employees of an organization have. When a new PBB is created, it is decided whether the capability for this PBB is critical in terms of capability management or not. If the successful enactment of the PBB and its related work package requires a dedicated knowledge or a regular training, then this will be the case. The owner of the PBB then needs to be able to mark the PBB and configure, that resources can only be assigned if they are qualified in terms of their capabilities to work on the PBB. The owner of the PBB needs to define the capability by assigning relevant qualifications needed. In case new qualifications are needed, the owner then needs to apply for a new Qualification entity to be created in the system and prepare relevant training materials that he should document with the new qualification. He is then the owner of the new qualification entity. In a next step, he needs to select resources / users to be trained for the new qualification. The training should end for the user by obtaining a qualification certificate that is recorded for the users. Users that possess all necessary qualifications (sum of qualifications = capability) are now qualified for the PBB and can be selected by the resource assignment mechanisms. The PBB owner will need to make sure enough users are available with the required set of qualifications and push for further qualification measures if required.

Depending on the type of qualification needed, the owner of the qualification entity has to take a decision, which maintenance scheme has to be applied. For some qualifications a one time training is enough. Others may need to have a re-assessment or a follow-up training within a certain period of time. Again other qualifications may be regarded as obtained if a user regularly enact PBBs with capabilities constituted out of this qualification and a last enactment is not older than a certain period of time.

The type of maintenance that the owner of the qualification entity wants to establish, has to be configured with the qualification entity, so do the necessary time schemes.

Aside from being a sole owner and having trained a certain number of users for the PBB, there should be the requirement to define a secondary owner. This should prevent that in case of organizational changes or if the original owner leaves the company, the capability management would be rendered unfunctional or PBBs are rendered orphaned.

On the resource/user level now this requires that the enactment of PBBs is to be recorded, at least for all those PBBs that are taken care of by the capability management. In addition, training times and the expiration of qualifications may be recorded. The user needs to have a dashboard to review for which PBBs he is intended according to his organizational chart position and which of them are governed by the capability management. The dashboard may depict, for which PBBs he would need to have a re-assessment / re-training of certain or all necessary qualifications in order to be eligible for assignment. There he should also see those PBBs of which the qualification times will expire soon. PBB owners on the other side need a review board to identify the number of eligible users for their PBBs, identify orphaned PBBs, identify retraining requirements, etc.

Example 7: Project start - Manual and Automatic Launch

Typically, a new project is initiated in a project kick-off in which some fundamental decisions have to be taken:

- In which domain does the project lies?

- Which domain models are to be assigned?

- What is the initial set of information to be provided?

Thereafter a starting PBB is to be selected to launch the instantiation of the process that enacts the project. The described scenario may represent a typical way to start a project and corresponds to a manual project start.

Aside from this, certain projects with preassigned domains, domain models, initial data sets should be able to be scheduled on calendar entries for single occurrence or under reoccurrence schemes (e.g. annual calendars, monthly calendars, weekly calendars, etc.) Preassigned starting PBBs in these cases are automatically triggered and initiate the enactment. This does automatically schedule tasks for users and drives the project. This scenario is an automated scheduled project start. Still these projects do need to belong to a project owner that has to be predefined during scheduling.

In a further development also non-scheduled automated project starts could be provisioned. Such projects would be started and instantiated, meaning they would run if certain situational conditions occur, certain events are thrown, etc.

From an architectural perspective, the central processing engine of the enactment environment should be designed as a structurally independent architectural entity and so does the User Interface as part of the enactment environment. The first being a rather central core running the declarative processing of all worldwide processes whereas the second is rather user-oriented, applied to regional requirements, languages etc. environment running rather "decentralized" on the clients (even though clients are centrally generated in a cloud application).

Example 8: Cross projecting

With cross projecting different processes should be linked because they share a certain similarity or should be carried out coherently (e.g. general projects for some customer). Once two processes are linked it should be possible to view the data of the other process.

Two processes should be linked if they share a certain similarity with regards to content (customer, project, product) and there is a reasonable time span within which those processes may be enacted.

The linking should be done by a dedicated set of users explicitly. Linking two processes at the start of a process as well as during the process execution with another process is required. Once two processes are linked all users within that process should be able to view the data of the other process.

Some projects in an organization may run completely independently from any other projects. However, a number of projects maybe closely related. This could for example be several projects that an organization handles for one and the same customer, projects, that have to be finished for such a customer at the same time, projects leading to product assortment assemblies with intended identical CI, or point-of-sale presentations, etc. Sometimes, however, projects might not seem to have a relationship at first glance but they may be related based on identical technology, identical supply chain structure, etc. In all such cases, it would be helpful for the users working on PBBs within these projects to know about each other.

In a first approach, it would be suitable if related projects were just marked manually by users, identifying the similarity. In later developments, however, it is foreseen the identification of similarities based on recognition of similar project pattern, similar content pattern, time overlap, etc. This could be achieved by computing a similarity function or by applying methodologies known from machine learning, classification and artificial intelligence science.

Once-linked projects have been identified, this should be visible to the user just working on one of these projects. While working on a PBB, the documentation of related processes (process data model) should be directly, or at least, easily accessible. Contents made available at corresponding PBBs in the other projects made available or acquired, should be made easily accessible, should be able to be selected and possibly transferred (copied, etc.) to the actual PBB.

Domain data models should be easily accessible as well. If possible, linked projects should be able to be displayed in their domain data models in comparison overviews. It should be possible to register for event notifications of linked projects, so that for example the user working on one of the linked projects gets a message notification on his messaging board when a certain PBB in a linked project experiences a state change.

Example 9: Crediting PBBs

After each milestone and after the process ended the users of the milestone PBBs and the user of the start able PBB of the process should have the ability to rank the PBBs that participated in the process.

The ranking should be made with grades (e.g. 1-7 - 4 is used as neutral element to improve statistical analysis) as well with a comment. The ranking "process" itself must not block the process flow in any way.

A typical management cycle consists out of planning, execution, reviewing and revised planning for the next cycle. As the process management tool has to implement managed organizational or similar processes it should inherently support management cycles. The easiest way of doing this in the context of a process assembly tool, is to institutionalize reviewing activities in certain PBBs. After a process is entirely completed or at least partially completed, management staff should review the results achieved in the projects. During reviews, they should rate or credit how well a certain PBB turned out to work in terms of the design of the work package (microstructure) as well as in terms of the linking results that were achieved with the PBB. Such credits have to be stored at the PBB and should be made available in reports to the PBB's owner. Reported credits and deficiencies then should help the owner to decide, which PBBs need to be revised and in what way they need to be revised etc. Later on, acquired credits could even be used for linking decisions in dynamic links to improve follow-up PBB selections.

Example 10: Specific use-cases

In this section, some use-cases of the method and system herein disclosed are described.

Modifying / repairing a process

Modifying / repairing a process is very important and must be supported by the PM-Tool. Modifying here means changing the process data and or changing the current process execution. There are mainly following reasons for this:

- process did not evolve as desired due to

  - a misconfiguration in the PBBs

  - wrong data entered in the PBBs

- a gate was opened manually

Once a process is detected which needs modification, a dedicated set of users must be able to put the current process 'on hold', so that only they can make modifications to the process.

Those users must be able to change the process data model. Moreover, they may need to cancel / abort PBBs and select a new 'current execution pointer' (CEP) for the process. This CEP will be a PBB, which was already processed. After setting the CEP it must be possible to set the state of the Gates of the PBB which is 'in progress'. Changing the CEP must cause a new Process execution context so that modifications of a process are traceable. Once all changes are made the users must be able to remove the 'on hold' status from the process.

Opening a gate manually

In some cases of a process execution, it might be necessary that a Gate (s. Gates) must be opened manually or prematurely in order to continue with the process or to speed it up. This requirement arises from a not optimal construction of PBBs and their Gate conditions or simply by the needs of business reality! Opening a gate manually is a very risky and dangerous operation since following gates / PBBs might not operate properly or wrong PBBs are selected in the upcoming gates. Nevertheless, this functionality has to be provided.

Since this is a very dangerous operation for the process only users with a certain role are allowed to perform this operation. In addition, before this operation is performed a dedicated warning has to be displayed and accepted before performing this operation. Moreover, it must be clearly visible in the UI that a gate was opened manually.

Delegating tasks

A user may be able to delegate an assigned Task to another user. The following use cases are most likely

- a supervisor decides that a Task must be done by someone else

- a user can't do that particular Task

- substitute decides to forward a Task

Example 11: Event architecture

From a user perspective it might be difficult to hint for the design of an event architecture. Some input to build such architecture may be based on observing that events may arise out of multiple occasions. These occasions could be:

- New data is acquired

- Existing data is changed

- New data or changed data fulfils a certain logic test or domain guideline passed/fa i led

- State change of a PBB from a defined initial state to a defined new state

- Any kind of error in the execution (e.g. query for a follow-up PBB did not resolve in a result, no user found for an assignment to a PBB, data not available for a computational evaluation, etc.)

- Inbound conditional check failed at a selected PBB

- The assignment of a user to a PBB is changed

- The task is actively postponed to another date by the user

- A scheduled PBB has reached a critical point of time in the fulfilment

- A scheduled PBB is late in schedule

- Process times of a PBB exceeded planned process time by a factor X

- Resource times of a PBB exceeded planned resource times by a factor X

- Actual costs of a PBB exceed planned costs by a factor X

- A project is commercially cancelled

- A project is finished

- The main responsibility of the project has been moved from one department to another department in the organigram

- Etc.

Some of the events have to have defined event handlers and need to be caught (for example errors during execution), others should be only available for subscription.

Events could either be handled by computational units of the systems automatically, such as: PBBs waiting in certain states, the enactment environments changing execution control based on a certain event, etc.

Others could just be leading to a notification on the user's message board.

On the other hand, could events also be handled retrospectively, for example triggering a message to the user when he is opening a certain PBB for enactment to obtain an additional information.

Example 12: Enactment Engine

The enactment engine as herein envisioned functions as a real-time system and processes all the requirements that are placed on the system. To get a new project rolling, a system interaction with the user is preferred. The user specifies concrete parameters such as the project types or product code within a ready-made project mask. The Enactment Engine processes this information in the background and combines the individual PBBs into a process chain. The wrapping information supports this process and enables the Enactment Engine to consider pre-assembled PBBs. Now it is not only beneficial to be able to construct a seamless process, but efficient resource management is useful as well. For this purpose, a common understanding of the implemented role model must first be created. Individual roles have been named for all departments that work with the system as herein described throughout the organization. The designation was based on the users' respective areas of responsibility. The parent company alone therefore lists more than 100 different roles within the system as herein described. In a second step, the users were assigned to the roles. The example in Figure 4 shows the role of the product managers - in short form called "PM-EAG-PM". In the column "Assigned users / role / group" it can be seen that 21 users (= 21 product managers) are assigned to this role. The roles are already hardwired to a PBB (see Figure 5), the users in turn are wired with product codes (Figure 6).

The product code in intended to be provided before the project starts, so that a user selection may be carried out by the Enactment Engine. If a project resource fails or is absent, this is currently being resolved by a substitution arrangement. Each user can store his or her substitution in the system and activate it if required. The Enactment Engine maintains a "to-Do List" for each user. It guides the employees through the working day and manages the sequencing of the work of each resource. As the last point in the area of resource management, the engine performs a measurement of the used resource time in the background. The measurement takes place while the user actively calls the process building block in the system for processing. The measurement result is then proposed to the user. The user can accept the proposed time or make corrections, since the engine cannot take exogenous factors such as incoming telephone calls into account.

At the same time, the Enactment Engine measures the process time, i.e. the time consumed by each task. By establishing a project visualization level, the Enactment Engine supports the project manager in all project monitoring and controlling tasks. This query view is called "Matrix View" in the system and method herein described and provides a tabular overview of all projects. A great advantage is that the user can configure the view individually according to his needs.

The to-do lists are provided for all users in a visual form. In this list, the blocks that are due for processing are first displayed on the macro level (see Figure 7).

To get to the micro level, the PBB must be opened by the user in a separate step.

The Enactment Engine imports all PBBs relevant for processing into the task list. In this area, the user can manage the tasks independently and perform resource time booking.

**Claims**

1. A computer-implemented method, for optimizing process assembly by handling process building blocks, comprising the steps of:

- populating, at a storage location, a system database with a plurality of work package elements, wherein the plurality of work package elements comprises work steps and work resources;
- modelling, at a processing unit, one or more work package elements of the plurality of work package elements into a plurality of process building blocks, wherein the process building blocks are stored into libraries;
- assembling, and preferably dynamically assembling, at least a subset of the plurality of process building blocks into a process, wherein dynamically assembling is based on at least one of a user selection and an automated linking to be carried out in a dynamic manner;
- enacting, at an enactment engine, one or more of the plurality of process building blocks, wherein enacting comprises tasking one or more work resources of the plurality of work resources with carrying out at least a subset of the plurality of process building blocks, based on the modelling of the one or more work package elements of the plurality of work package elements into process building blocks,

wherein modelling comprises assigning information, and wherein a data representation of the process building blocks resulting from any of the method steps is stored at the storage location or at a further storage location and structured into data models, and wherein the step of assembling is based on information from the data models.

2. A computer implemented method according to claim 1, further comprising updating the data models, based on any of the method steps, wherein updating the data models comprises updating model information.

3. A computer implemented method according to any of the preceding claims further comprising executing the process, wherein executing the process comprises executing the work package steps modelled into process building blocks.

4. A computer implemented method according to any of the preceding claims, wherein modelling comprises at least one of chaining, linking, sequencing, and timing individual work package elements with one another, based on the at least one of descriptions, attributes, properties, information from the data models, capabilities and qualification information.

5. A computer-implemented method according to any of the preceding claims, wherein the step of modelling is selected from a group of methodologies comprising local modelling and global modelling, and wherein during execution of the process each process building block has only one direct predecessor process building block.

6. A computer-implemented method according to any of the preceding claims, wherein each process building block comprises one or more of a macro level, a micro level, content panes, an inbound condition, gates and a status model.

7. A computer-implemented method according to any of the preceding claims, wherein a plurality of processes forms a project, and wherein one or more projects deliver one or more products.

8. A computer-implemented method according to any of the preceding claims, wherein the data models are based on graph-structured databases having a tree structure with nodes and edges, and wherein, in process data models, process building blocks represent nodes, and edges represent links between the gate of one process building block to any one or more other process building blocks.

9. A computer-implemented method according to any of the preceding claims, wherein each type of data model forms an ontology, wherein the data models are searchable based on one or more tags, and wherein domain data models comprise searchable template ontologies.

10. A computer-implemented method according to any of the preceding claims, wherein accessing data in data models comprises defining one or more configurable queries.

11. A computer-implemented method according to any of the preceding claims, wherein the method is capable of operating on a cloud-based system, preferably runs within a browser window and is easily accessible and usable by a number of computer systems, comprising access and usability through mobile applications.

12. A non-transitory computer-readable medium comprising instructions which, when executed by one or more processors cause the one or more processors to perform the steps of the method of any of the preceding claims.

13. A data processing device comprising means for carrying out the steps of the method of any of claims 1 to 11.

**14.** A process building block handling system for implementing the method of any of claims 1 to 11, the system comprising the data processing device of claim 13, the non-transitory computer-readable medium of claim 12, a process building blocks library, an enactment engine, and a content engine.

**15.** A computer program comprising instructions which, when the program is executed by the data processing device of claim 13, causes the device to carry out the steps of the computer-implemented method of any of claims 1 to 11.

Figure 1

Figure 2

**PBB Overview**  ＋ ADD

Search     Q

Filter

| Version | Code | Type | Name | Status |
|---------|------|------|------|--------|
| v0001 | PBB000028 | Start PBB | New Trade Article Project | Active |
| v0002 | PBB000029 | Milestone PBB | Supplier Model Check | Active |
| v0001 | PBB000111 | Normal PBB | Test Draft | Draft |
| v0001 | PBB000138 | Milestone PBB | MS: Gadget Development | Active |
| v0001 | PBB000139 | Normal PBB | Develop gadget | Active |
| v0001 | PBB000140 | Milestone PBB | MS: Sales And Marketing | Active |

Figure 3

CTO
Users in department: 1

EAG-TD-L
Users in department: 0

EAG-TPK-L — Users in department: 1
EAG-GF-L — Users in department: 1
EAG-LAB-L — Users in department: 1
EAG-TPM-L — Users in department: 1

EAG-TPK — Users in department: 5
EAG-GF — Users in department: 5
EAG-LAB — Users in department: 2
EAG-TPM-DM — Users in department: 3
EAG-TPM-SEC-L — Users in department: 1

Figure 4

EP 4 307 191 A1

| Name | L | # | Code | Assigned | | | Status | | Last Status | Duration | Deadline | |
|---|---|---|---|---|---|---|---|---|---|---|---|---|
| ∧ MS: Packaging Preparation Work | 0 | 0 | PBB000169 | Assigned | ⬆ | 👥 | Waiting for results | ▶ ✓ | Created | 14 day(s) | 15/12/2021 | |
| Provide diecut | 1 | 0 | PBB000161 | Assigned | ⬆ | 👥 | Finished | ▶ ✓ | Ready to process | 0 day(s) | | |
| Release diecut | 1 | 1 | PBB000162 | Assigned | ⬆ | 👥 | Finished | ▶ ✓ | Ready to process | 0 day(s) | | |
| Provide all necessary data (CM) | 1 | 2 | PBB000163 | Assigned | ⬆ | 👥 | Finished | ▶ ✓ | Ready to process | 0 day(s) | | |
| Provide all necessary data (TP) | 1 | 2 | PBB000164 | Assigned | ⬆ | 👥 | Finished | ▶ ✓ | Ready to process | 0 day(s) | | |
| Start packaging preparation in MA | 1 | 3 | PBB000165 | Assigned | ⬆ | 👥 | Finished | ▶ ✓ | Ready to process | 0 day(s) | | |

Figure 5

36

| Tabellen Link Code | Code | Beschreibung | Rolle | Benutzer | | PM User Name |
|---|---|---|---|---|---|---|
| ITEM SU... | B1150 | Power Generator | BUM-CM-EAG | Name 1 | /IETZ | Name 1 |
| ITEM SU... | B1160 | Table Saw | BUM-CM-EAG | | /IETZ | |
| ITEM SU... | B1170 | Transportation Tools | BUM-CM-EAG | Name 1 | /IETZ | Name 1 |
| ITEM SU... | B1180 | Work Shop Equipment | BUM-CM-EAG | | /IETZ | |
| ITEM SU... | E2010 | Cordless Drill (not PXC) | BUM-CM-EAG | Name 1 | | Name 1 |
| ITEM SU... | E2020 | Cordless Multifunctional Tool | BUM-CM-EAG | | | |
| ITEM SU... | E2030 | Cordless Impact Drill | BUM-CM-EAG | Name 1 | | Name 1 |
| ITEM SU... | E2040 | Cordless Screwdriver | BUM-CM-EAG | | | |
| ITEM SU... | E2042 | Drywall Screwdriver | BUM-CM-EAG | Name 2 | | Name 2 |

Figure 6

Tasks

Search     🔍

| Filter | | | | | | | | | | | 🍸 ⊞ ∧ |

| ☐ My recent items | Show tasks<br>All ▾ | Groups<br>My tasks ▾ | RESET FILTER |
|---|---|---|---|

| Task Code | Name | Project Code | Status | Priority | Actions | Milestone Due Date | Postpone end date | Project Name | PBB Code | Assigned to |
|---|---|---|---|---|---|---|---|---|---|---|
| PSC0000050002 | Check Contract Situation And Notice Period ✕ | PSC000005 | Ready to process | 🏳 | 🕘 👤 | 2021/12/20 | | Warehouse Contract | PBB000196 | Username |
| PSC0000180001 | Enter Contract Data ✕ | PSC000018 | Ready to process | 🏳 | 🕘 👤 | No due date | | Test | PBB000015 | Username |

Figure 7

Europäisches
Patentamt

European
Patent Office

Office européen
des brevets

## EUROPEAN SEARCH REPORT

Application Number

EP 23 18 4603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/033191 A1 (DAVIES JAMES [US] ET AL) 13 February 2003 (2003-02-13) * paragraphs [0015] – [0017], [0036], [0108], [0114] – [0116], [0144], [0156], [0172]; figures 2, 4a * | 1–15 | INV.<br>G06Q10/0631<br>G06Q10/0633<br>G06Q10/0637<br>G06Q10/0639<br>G06Q10/067 |
| X | US 2010/114630 A1 (ADLER SHARON C [US] ET AL) 6 May 2010 (2010-05-06) * paragraphs [0034] – [0049], [0062] – [0072], [0074] * | 1–15 | |
| X | US 2022/051171 A1 (CELLA CHARLES HOWARD [US] ET AL) 17 February 2022 (2022-02-17) * paragraphs [0342], [0649] – [0652] * | 1–15 | |

TECHNICAL FIELDS
SEARCHED      (IPC)

G06Q

The present search report has been drawn up for all claims

| Place of search | Date of completion of the search | Examiner |
|---|---|---|
| Munich | 1 December 2023 | González, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 4603

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2023

| Patent document cited in search report | | Publication date | Patent family member(s) | | Publication date |
|---|---|---|---|---|---|
| US 2003033191 | A1 | 13-02-2003 | AU | 6988601 A | 14-01-2002 |
| | | | US | 2003033191 A1 | 13-02-2003 |
| | | | WO | 0203225 A2 | 10-01-2002 |
| US 2010114630 | A1 | 06-05-2010 | NONE | | |
| US 2022051171 | A1 | 17-02-2022 | AU | 2020379834 A1 | 09-06-2022 |
| | | | CN | 115699050 A | 03-02-2023 |
| | | | JP | 2023500378 A | 05-01-2023 |
| | | | US | 2022035341 A1 | 03-02-2022 |
| | | | US | 2022035342 A1 | 03-02-2022 |
| | | | US | 2022036274 A1 | 03-02-2022 |
| | | | US | 2022036275 A1 | 03-02-2022 |
| | | | US | 2022036276 A1 | 03-02-2022 |
| | | | US | 2022036301 A1 | 03-02-2022 |
| | | | US | 2022036302 A1 | 03-02-2022 |
| | | | US | 2022044204 A1 | 10-02-2022 |
| | | | US | 2022051171 A1 | 17-02-2022 |
| | | | US | 2022051184 A1 | 17-02-2022 |
| | | | US | 2022051361 A1 | 17-02-2022 |
| | | | US | 2022058569 A1 | 24-02-2022 |

EPO FORM P0459

For more details about this annex : see Official Journal of the European Patent Office, No. 12/82